(19) Europäisches Patentamt
European Patent Office
Office européen des brevets

(11) **EP 1 658 488 B1**

(12) **EUROPEAN PATENT SPECIFICATION**


(45) Date of publication and mention of the grant of the patent:
**12.01.2011 Bulletin 2011/02**

(21) Application number: **04768226.5**

(22) Date of filing: **26.08.2004**

(51) Int Cl.:
***G01N 21/65*** (2006.01) ***G01N 33/58*** (2006.01)
***G01J 3/44*** (2006.01) ***C12Q 1/68*** (2006.01)

(86) International application number:
**PCT/GB2004/003671**

(87) International publication number:
**WO 2005/019812 (03.03.2005 Gazette 2005/09)**


(54) **NUCLEIC ACID SEQUENCE IDENTIFICATION**

NUKLEINSÄURESEQUENZIDENTIFIKATION

IDENTIFICATION D'UNE SEQUENCE D'ACIDE NUCLEIQUE


(84) Designated Contracting States:
**AT BE BG CH CY CZ DE DK EE ES FI FR GB GR HU IE IT LI LU MC NL PL PT RO SE SI SK TR**

(30) Priority: **26.08.2003 GB 0319949**

(43) Date of publication of application:
**24.05.2006 Bulletin 2006/21**



(73) Proprietor: **The University of Strathclyde**
**Glasgow G1 1XQ (GB)**

(72) Inventors:
- **GRAHAM, Duncan,**
**Dept. of Pure and Applied Chem.**
**Glasgow G1 1XL (GB)**
- **SMITH, William E.,**
**Dept. of Pure and Applied Chem.**
**Glasgow G1 1XL (GB)**
- **FRUK, Ljiljana**
**49232 Radoboj (HR)**

(74) Representative: **Kremer, Simon Mark et al**
**Mewburn Ellis LLP**
**33 Gutter Lane**
**London**
**EC2V 8AS (GB)**



(56) References cited:
**WO-A-99/60157**

- **FRUK LJILJANA ET AL: "A new approach to oligonucleotide labelling using Diels-Alder cycloadditions and detection by SERRS." CHEMICAL COMMUNICATIONS (CAMBRIDGE, ENGLAND) 21 SEP 2002, no. 18, 21 September 2002 (2002-09-21), pages 2100-2101, XP001183780 ISSN: 1359-7345**
- **GRAHAM DUNCAN ET AL: "Detection of DNA probes using Diels Alder cycloaddition and SERRS." THE ANALYST. JUN 2003, vol. 128, no. 6, June 2003 (2003-06), pages 692-699, XP009040232 ISSN: 0003-2654**
- **DUBERTRET B ET AL: "Single-mismatch detection using gold-quenched fluorescent oligonucleotides" NATURE BIOTECHNOLOGY, NATURE PUBLISHING, US, vol. 19, no. 4, April 2001 (2001-04), pages 365-370, XP002224627 ISSN: 1087-0156**
- **DU HUI ET AL: "Hybridization-based unquenching of DNA hairpins on Au surfaces: Prototypical "molecular beacon" biosensors." JOURNAL OF THE AMERICAN CHEMICAL SOCIETY, vol. 125, no. 14, 9 April 2003 (2003-04-09), pages 4012-4013, XP002307240 ISSN: 0002-7863**
- **TYAGI S ET AL: "MOLECULAR BEACONS: PROBES THAT FLUORESCE UPON HYBRIDIZATION" NATURE BIOTECHNOLOGY, NATURE PUBLISHING, US, vol. 14, 1 March 1996 (1996-03-01), pages 303-308, XP000196024 ISSN: 1087-0156**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



EP 1 658 488 B1

## Description

TECHNICAL FIELD

The present invention relates to methods and materials for detecting or identifying particular nucleic acid sequences in a sample using modified molecular beacons.

BACKGROUND ART

The ability to detect specific DNA sequences or individual DNA bases within a sequenced genome is key to exploiting the data provided from the sequencing. This data can be used in a number of ways including monitoring gene expression and evaluation or diagnosis of specific disease states including infectious and hereditary disease.

In recent years a number of ingenious methods for detecting specific DNA sequences have been reported. The most widely used are based on fluorescence detection during PCR amplification and are closed tube homogenous assays. These include Molecular Beacons,[1] Taqman,[2] Scorpions[3] and Hybridisation Probes. [4] Whilst widely accepted as being the best currently available, these methods rely solely on fluorescence detection which has it's own advantages and disadvantages.

The advantages are that it is a widely accepted and used detection technique, the addition of the labels has been well established and instrumentation and designer probes are commercially available. The main disadvantages are that due to the detection limit of fluorescence a large number of PCR cycles need to be used to generate sufficient numbers of the target and that the homogeneous multiplexing is at best four and three if an internal standard used. One of the problems in the use of quenched probes such as Molecular Beacons is that there is always background fluorescence due to the quenching of the fluorophore being less than 100 %. This reduces the signal to noise ratio and hence the sensitivity.

In an attempt to overcome this problem Dubertret *et al.* used a gold nanoparticle attached to the 3'-end of a Molecular Beacon via a phosphine ligand with a 5'-FAM label (in which fluorescein was linked via an amide label). [5]

In that study the quenching was improved due to the presence of the gold nanoparticle. The probes used could also detect a single base mismatch at room temperature.

It will be clear from the above that novel formats for detecting or identifying particular nucleic acid sequences in a sample, particularly those which have one or more advantages over those in current use, would provide a contribution to the art.

DISCLOSURE OF THE INVENTION

The present inventors have devised a new class of biomolecular probe which can be used in assays which are flexible, capable of single base resolution, and have a massive capacity for "one pot" multiplexing. In preferred embodiments the assays combine the detection techniques of fluorescence and surface enhanced Raman scattering (SERS) to provide an ultra sensitive probe.

As is known in the art, a Raman spectrum arises because light incident on an analyte is scattered due to nuclear motion and excitation of electrons in the analyte. Where the analyte whose spectrum is being recorded is closely associated with an appropriate surface, such as a roughened metal surface, this leads to a large increase in detection sensitivity, the effect being more marked the closer the analyte sits to the "active" surface (the optimum position is in the first molecular layer around the surface, i.e., within about 2 nm of the surface). This is termed 'SERS'.

A further increase in sensitivity can be obtained by operating at the resonance frequency of the analyte (in this case usually a dye attached to the target of interest). Use of a coherent light source, tuned to the absorbance maximum of the dye, gives rise to a $10^3$-$10^5$-fold increase in sensitivity (the laser excitation may also be set to the maximum of the surface plasmon resonance, which may or may not coincide with the dye maxima). The surface enhancement effect and the resonance effect may be combined to give SERRS and a range of excitation frequencies will still give a combined enhancement effect.

Thus the technique of SERRS provides a vibrational fingerprint of the analyte when two conditions are met. These are (i) the adsorption onto a suitable metal surface and (ii) the presence of a visible chromophore[6,7]. The use of a metal additionally means that fluorescence is efficiently quenched.[7] This means that a large range of coloured molecules, including standard fluorophores, give excellent SERRS signals.

Since SERRS is preferred, in general this term will be used herein for brevity. However it will be understood the invention can also be practised with SERS if that is desired, for example when minimising background fluorescence by using an excitation frequency in the infra-red region.

The SERRS Beacon is a dual labelled probe with a different dye at each of its two ends. In conventional Beacons a quencher such as DABCYL is used with a dye. In the present invention, one of the dyes is specifically designed such

that it is capable of immobilising the oligonucleotide probe onto an appropriate metal surface. In use, the SERRS Beacon is immobilised in the "closed state" on the metal surface, and this has the effect that due to the closeness to the surface of the coloured species a SERRS spectrum corresponding to both dyes is detectable.

When the complementary sequence hybridises, the SERRS Beacon opens up and one of the dyes is removed from the surface - this causes the SERRS signals to change to show only the dye on the surface, not the other dye. The wide combination of different dyes offers a massive coding potential for simultaneous multiplexed analysis of DNA sequences.

A preferred embodiment of the invention is shown in Figure 1. This SERRS Beacon has a fluorophore at one end and the specifically designed surface-seeking dye at the other. When immobilised in the "closed state" on the metal surface both the metal and the dye act as quenchers of the fluorescence, but nevertheless due to the closeness to the surface of the coloured species a SERRS spectrum corresponding to both labels is still detectable. When the SERRS Beacon opens up the fluorophore is removed from the surface. This causes the quenching effect of both the dye and the metal to be reduced. Fluorescence is now emitted and the SERRS signals change to show only the dye on the surface and no signals from the fluorophore.

In preferred embodiments of the invention, a "binary code" can be constructed by using combinations of fluorophores and dyes. The same fluorophore can be used with different dyes, as can different fluorophores with the same dye or two or more different dyes.

SERS has previously been applied in a number of nucleic acid detection formats (see e.g. US patent 5 721 102 (Vo Dinh et al); WO 97/05280 (University of Strathclyde; and WO 99/60157 (Zeneca)). However its application to molecular beacon technology, and the advantages discussed above had not previously been recognised.

Thus in a first aspect of the present invention there is disclosed a method for determining the presence or absence of a target nucleotide sequence in a sample nucleic acid, the method comprising:

(a) providing a detection agent, which agent comprises:

(i) a probe comprising

- a target complement sequence (TCS) being complementary to the target sequence;
- flanking the TCS, first and second oligonucleotide arms,
  said first and second oligonucleotide arms forming a stem duplex,
  and said first arm incorporating a first label moiety being detectable by surface enhanced Raman spectroscopy (SERS)
  and said second arm terminating in a second label moiety being detectable by SERS,
  which second arm further includes a surface seeking group (SSG) capable of promoting association of the second label onto a metal surface

(ii) associated with said probe via said SSG, a metal surface, such that said first and second label moieties are in close proximity to each other and to the metal surface

(b) exposing the sample to the detection agent,
(c) detecting hybridisation of the TCS to any target sequence present in the sample by a change in the SERS spectra of said agent.

As with other molecular beacons, the stem duplex has a melting temperature above the detection temperature under the assay conditions. Hybridisation of the TCS to any target sequence present in the sample causes the separation of the first and second oligonucleotide arms of the duplex. In the present case this causes the second label moiety to no longer be in close proximity to the metal surface. The reduction in surface enhancement resulting from reduced proximity to the metal surface results in a change of the SERS spectrum of second label moiety, and hence the overall SERS spectrum.

By "terminating" is meant that the label moiety is at or sufficiently close to the terminus of the arm, such that the arm does not sterically prevent the label moiety approaching the metal surface when the probe is in its "closed" state. Generally it is preferred that the labels are at the actual termini of the arms, although this is not a necessity - in particular where the first label moiety is detectable by fluorescence, including Surface Enhanced Fluorescence (SEF - discussed in more detail hereinafter) it may be preferred that it is present internally within the arm of the agent.

In a preferred embodiment, the first label moiety is detectable by both fluorescence and SERS. In this case the reduced proximity to the metal surface also causes an increase in fluorescence of said first label moiety resulting from reduced quenching of the fluorescence by the metal surface and\or proximity of the second label moiety.

Thus in this embodiment step (c), which is detection of hybridisation of the TCS to any target sequence present

in the sample, can additionally or alternately be carried out by detecting a change in the fluorescence of the agent.

The exposure of the sample to the agent can take any form which brings the two into sufficient contact to allow binding of the agent to the target sequence of the sample. Generally this will be mixing of solutions of these components.

Some embodiments and aspects of the present invention will now be discussed in more detail.

*Target and sample nucleic acids*

The "sample nucleic acid" can be any nucleic acid, including DNA (from any source e.g. genomic, cDNA, synthetic etc.), RNA (e.g. mRNA, tRNA, rRNA, synthetic etc.) or derivatives of these. Generally it will be at least 10 nucleotides in length, more preferably at least 20, 30, 40, 50, 100 or 200 nucleotides in length. The sample can represent all or only some of the nucleic acid present in a given source. The sample may be prepared prior to testing in order to make the sample nucleic acid therein more available for the testing process. For instance the sample nucleic acid may be fully or partially purified and/or fragments may be produced and separated. As an alternative to, or in addition to, using the nucleic acid in the sample directly, copies may be prepared and used (e.g. using PCR). The term "sample nucleic acid" covers all of these possibilities.

Generally the sample nucleic acid will be prepared as single strand nucleic acid prior to the sequence detection.

If desired the sample may be blotted, tethered or otherwise immobilised on a solid phase, optionally in the form of an array (e.g. a so called nucleic acid chip - see e.g. Marshall & Hodgson (1998) Nature Biotechnology 16: 27-31).

The "target" sequence itself may be any sequence of any length within the sample which it is desired to investigate. Thus it may be any sequence found in a genome, or subgenomic nucleic acid, chromosome, extrachromasomal vector, or gene, or motif, or noncoding sequence, or a sequence tagged site, or expressed sequence tag. The sequence may be derived from any source e.g. published material on a database.

The sequence may be unique within a given genome, or may have multiple occurrences within it (the methods of the present invention may be used to determine its frequency of occurrence). Likewise the sequence may be unique to a particular individual, or population, or species, genus, family etc. or be present within more than one of these groupings. The length of the target sequence may be selected on the basis of its statistical likelihood of chance occurrence within a given size of genome. For instance it has been suggested that a sequence of up to 16 bases in yeast, and a few more in humans (e.g. 17-24), may be sufficient to indicate a unique sequence in these organisms.

Particularly envisaged is the detection of nucleic acid "variants". These may include single nucleotide variants (mutations or polymorphisms) or variable number tandem repeats, or other satellite or microsatellite repeats. Thus the target sequence in these cases may be characterised by only a single base, or numbers of pairs of bases, within a given longer sequence.

As set out in more detail below, it may be desirable to probe several target sequences simultaneously using appropriate, distinctive agents.

*Target complement sequence*

The TCS of the agent will generally be based on a nucleic acid (DNA or RNA) or modified nucleic acid, or nucleic acid analog, which is complementary to all or part of the target sequence.

Under certain circumstances (when the TCS is not being synthesised to order for instance) it may not be necessary to know its sequence. For instance nucleic acid may be taken from a (known) source, cleaved, and the cleaved portions can be used to prepare the detection agent of the present invention. Thus the target (original source) is predetermined, even if the sequence is not established.

By "complementary" is meant capable of specific base pairing with the target sequence whereby A is the complement of T (and U); G is the complement of C. Generally complementary nucleic acids run anti-parallel i.e. one runs 5' to 3', while the other 3' to 5'. Where modified nucleic acid, or nucleic acid analog is used, the base pairing is between corresponding modified or analog bases and the complementary target sequence as appropriate.

It is known that normally nucleic acid hybridisation conditions require the presence of salt to prevent the repulsion of the negative phosphate backbones. However if it is preferred not to add salt, this may be avoided by use of modified nucleic acid, or use of a nucleic acid analog. For instance it is known that DNA forms which are neutral, or at least zwitterionic, do not require high salt concentrations for hybridisation to occur. One possible example of this is propargyl amino modified base as described by Cruickshank & & Stockwell (1988) Tetrahedron Letters 29: 5221-5224, and later in Graham et al (1997) Anal Chem 69: 4703-4707. This particular modification is also believed to promote greater specificity of base pairing (see Wagner et al (1993) Science 260: 1510-1513). In another embodiment peptide nucleic acid (PNA) is used for the probe which assemble the colloid.

The TCS can be any length appropriate to the target sequence (see above), but will generally be between from 10 to about 140 nucleotides, more preferable from 20 to 60 nucleotides.

In one embodiment the TCS are based on so called "siRNAs" which are typically between 19-23 nucleotides

in length. The present invention may, for example, be used to detect the binding of siRNAs to the genes which they silence(see e.g. S. M. Elbashir, W. Lendeckel, T. Tuschl, "RNA interference is mediated by 21- and 22-nucleotide RNAs." Genes Dev.,15, p188-200 (2001); S. M. Elbashir, J. Harborth, W. Lendeckel, A. Yalcin, K. Weber, T. Tuschl, "Duplexes of 21-nucleotide RNAs mediate RNA interference in cultured mammalian cells." Nature, 411, p494-498 (2001)).

*The duplex*

Preferably the stem duplex is between 3-25 nucleotides in length, more preferably between 6 and 12 nucleotides in length. Generally it will be formed by complement sequences (the first and second arms) which conform a unitary probe into a hairpin i.e. preferably the first arm will comprise a sequence of between 6-12 nucleotides immediately adjacent to its terminus that are complementary to nucleotides of the second arm sequence immediately adjacent to its terminus. Preferably the melting temperature of the duplex will be at least 5°C above the chosen detection temperature (which detection temperature will generally be room temperature).

One of said arm sequences may be at least partially complementary to the target nucleic acid sequence.

*Detection by SERS*

This can be by conventional methods, for instance as disclosed in WO 97/05280 (University of Strathclyde).

Thus in SERS the primary measurements are of the intensity of the scattered light and the wavelengths of the emissions. Neither the angle of the incident beam nor the position of the detector is critical. With flat surfaces an incident laser beam is often positioned to strike the surface at an angle of 60° with detection at either 90° or 180° to the incident beam. With colloidal suspensions detection can be at any angle to the incident beam, 90° again often being employed.

The detection step of the assay may comprise measuring the SERS spectra, and this measurement may be quantitative. As discussed above, in all aspects and embodiments of the invention it is preferred that the SERS is SERRS, and that the label moieties are appropriate for SERRS.

Several devices are suitable for collecting SERS signals, including wavelength selective mirrors, holographic optical elements for scattered light detection and fibre-optic waveguides. Gratings, prisms and filters can for example be used to discriminate between the different scattering frequencies. The intensity of a SERS signal can be measured using a charge coupled device (CCD), a silicon photodiode, or photomultiplier tubes arranged either singly or in series for cascade amplification of the signal. Photon counting electronics can be used for sensitive detection. The choice of detector will largely depend on the sensitivity of detection required to carry out a particular assay.

In one embodiment it may be preferred to collect the total Raman scattering using a filter and photo multiplier tube as opposed to a spectrometer.

When multiplexing (see below) a complex SERS spectrum across a range of wavelengths will generally be obtained. Although analysis by eye may be possible, methods for obtaining and/or analysing a SERS spectrum will preferably include the use of some form of data processor such as a computer. Methods for statistically analysing and resolving complex spectral data are well known to those skilled in the art and do not per se form part of the present invention. Such methods may, for example, utilise neural networks, partial least squares analysis, density function algorithms and so on (see e.g. S.D. Brown, "Chemical Measurements and Data Reduction from a Systems Analysis Perspective", TrAC, 6 (10) 260-266 (1987); S.D. Brown, "Chemometrics", Encyclopedia of Statistical Sciences, Update, Wiley-Interscience: New York, NY, Update Vol. 3, 77-87 (1998); S.D. Brown, "Chemometrics." In Encyclopedia of Analytical Chemistry, R.A. Myers, Ed.,Wiley Interscience, pp 9669-9671 (2000); K.L. Mello and S.D. Brown, "Novel 'Hybrid' Classification Method Employing Bayesian Networks," J. Chemom., 13, 579-591 (1999); K.L. Mello and S.D. Brown, "Combining Recursive Partitioning and Uncertain Reasoning for Data Exploration and Characteristic Prediction," Proceedings, AAAI Symposium on Predictive Toxicology, 119-122 (1999); K.L. Mello and S.D. Brown, "System for Discovering Implicit Relationships in Data and a Method of Using the Same," US Patent No. 6466929, Issued 10/15/02; N. A. Woody and S.D. Brown, "Partial Least Squares Modeling of Continuous Nodes in Bayesian Networks," Analytica Chimica Acta, 2003, 490, 355-63; H.W. Tan, C.R. Mittermayr, and S. D. Brown, "Robust Calibration with Respect to Background Variation," Applied Spectrosc., 55, 827-33 (2001); R. N. Feudale, H.-W. Tan, S. D. Brown, "Piecewise Orthogonal Signal Correction," Chemom. Intell. Lab. Syst., 63, 129-38 (2002)).

*Detection by fluorescence*

Where the first label is a fluorophore, fluorescence detection may be used as an initial rapid screen (for example in a microtitre plate to find the 'hot' wells). Samples giving a positive fluorescence in the initial screen can then be interrogated by SERS.

The nature of the present invention is such that phenomenon of surface enhanced fluorescence (SEF) may be used to detect the probe in its "open" conformation. SEF requires appropriate spacing (e.g. c. 60 angstrom depending

on environmental factors) of the fluorophore from the metal surface in order to demonstrate enhancement - see Strekal, N., Maskevich, A., Maskevich, S., Jardillier, J. C., Nabiev, I., Biopolymers 2000, 57, 325-328; Antunes, P. A., Constantino, C. J. L., Aroca, R. F., Duff, J., Langmuir 2001, 17, 2958-2964.

Thus the fluorophore may be derivatised at an appropriate point in the probe (not necessarily at the terminus of the first arm) so that once opened by hybridisation the fluorophore is a controlled distance away from the surface.

*Label moieties*

As discussed in the examples below, it is preferable that the first label moiety (detectable by both fluorescence and SERS) is conjugated to the 5' arm sequence and a second label moiety conjugated to the 3' arm sequence. However the converse (i.e. fluorophore at the 3' terminus may also be employed.

The label moieties may be linked through a spacer, e.g., an alkyl spacer, to said arms.

More than one first label moiety may be incorporated into the first arm. As discussed above, preferably the or each first label moiety is incorporated at or near the terminus of the first arm.

Examples of suitable SERS-active (more preferably, SERRS active) species include:

fluorescein dyes, such as 5- (and 6-) carboxy-4',5'-dichloro-2',7'-dimethoxy fluorescein, 5-carboxy-2',4',5',7'-tetrachlorofluorescein and 5-carboxyfluorescein;

rhodamine dyes such as 5- (and 6-) carboxy rhodamine, 6-carboxytetramethyl rhodamine and 6-carboxyrhodamine X;

phthalocyanines such as methyl, nitrosyl, sulphonyl and amino phthalocyanines;

azo dyes such as those listed in C H Munro et al, Analyst (1995), 120, p993;

azomethines;

cyanines and xanthines such as the methyl, nitro, sulphano and amino derivatives; and

succinylfluoresceins.

As discussed in the Examples below, fluorescein is particularly efficiently quenched by the preferred SERS dyes of the present invention, such as those based on the azo-benzotriazoles (see below).

Each of these examples may be substituted in any conventional manner, giving rise to a large number of useful labels.

The choice of label in any given case will depend on factors such as the resonance frequency of the label, the other species present, label availability, choice or laser excitation equipment etc. It may be preferred that the second label moiety is an azo group, which can be very easily derivatised (see below). The skilled person will appreciate, however, that other SAS may also be readily employed in the invention.

The dye may be associated with the metal surface using either covalent or non-covalent interactions. Particular preferred is the use of SSGs as described above

*SSGs*

"Surface seeking groups" (SSGs) bind extremely tightly to metal surfaces, and are discussed in WO 97/05280 (University of Strathclyde). SSGs are generally either complexing or chelating in nature, or will comprise bridging ligands or polymer forming groups. The interaction between the SSG and the metal surface will typically be by chemisorption of the complex onto the surface, or by chemical bonding of the complex with a coating on the surface.

Naturally the choice of the SSG will depend on the nature of the surface (e.g. its charge and the presence or absence of an oxide or other layer) and of any surface coatings or other species (such as citrate reducing agents) associated with it, and also on the nature of the probe. For most useful surfaces, the functional group preferably comprises a Lewis base. Ideally, it is actively attracted to the surface in use. For gold surfaces phosphorus and sulphur containing groups, along with soft nitrogen ligands, may be particularly preferred.

Thus suitable groups by which the agent may be bound to the active surface include complexing groups such as nitrogen, oxygen, sulphur and phosphorous donors; chelating groups; bridging ligands and polymer forming ligands.

*SSGs - Triazoles and Benzotriazoles*

The triazole group (Formula A1) is rich in nitrogen lone pairs and seems to have a particular affinity for certain metal colloids. Thus, incorporation of this group in the agent is particularly preferred, since it can increase the proximity of the label to the surface, and thereby the surface enhancement effect which occurs when the probe binds the target sequence.

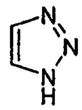

(A1)

Preferably, the agent incorporates a benzotriazole (BT) group (Formula A2), particularly when the metal surface is silver- or copper-based. BT groups have a high degree of conjugation (especially when deprotonated) and are thus particularly amenable to SERRS detection which relies on label resonance.

1H-benzotriazole

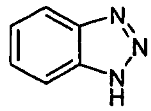

(A2)

Benzotriazole derivatives (such as those shown in Formula A3) may be readily obtained and can be coupled with existing labels (such as azo dyes) to give appropriately unitary label moieties\SSGs.

amino-1H-benzotriazole

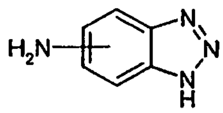

(A3)

In preferred forms, the SSG is modified to be SERRS active and this is used to conjugate the probe to the metal surface. Examples of such groups include azo-benzotriazoles (Formula A4) and substituted derivatives thereof, typically formed by combining azo substrates with benzotriazole derivatives. Examples of suitable azo-benzotriazoles include 4-, 5-, 6-, and 7-azo-1H-benzotriazoles, and substituted derivatives thereof. The compounds comprise an azo chromophore which increases the wavelength of the absorbance maximum of the label.

azo-1H-benzotriazoles

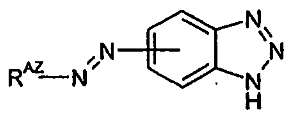

(A4)

In one embodiment, the compound is selected from compounds of the following formula:

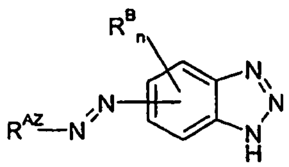

(A5)

wherein:
$R^{AZ}$ is independently an azo substituent;
n is independently 0, 1, 2, or 3; and,
each $R^B$ is independently a benzo substituent.
In one embodiment, the compound is selected from compounds of the following formulae:

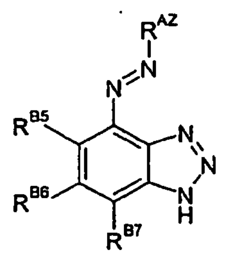

(A5-1)

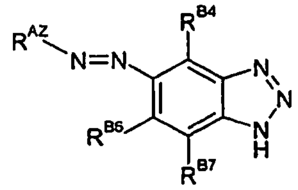

(A5-2)

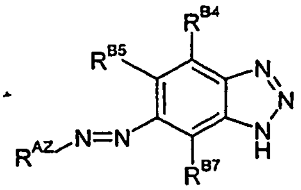

(A5-3)

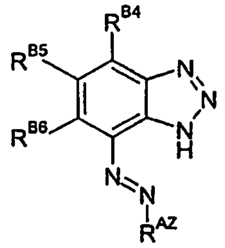

(A5-4)

wherein:

$R^{AZ}$ is independently an azo substituent; and,

each of $R^{B4}$, $R^{B5}$, $R^{B6}$, and $R^{B7}$ is independently -H or a benzo substituent.

In one embodiment, the compound is selected from compounds of Formula A5-3 and Formula A5-4.

In one embodiment, the compound is selected from compounds of Formula A5-3 ("6-position" azo)

In a preferred embodiment, the compound is selected from compounds of Formula A5-4 ("7-position" azo).

*Probes and Linkers*

In all cases, the compound is linked to the probe, e.g., a nucleotide arm of the probe, either directly or via a linker (e.g., an alkyl linker). See, e.g., below under the heading "Synthesis."

Generally a linker of less than 5, 10 or 15 carbons in length will be preferred. Different linkers (e.g., different lengths of linkers) can also provide the agents with molecularly specific SERRS spectra as described below.

For example, one of the benzo substituents ($R^B$, e.g., $R^{B4}$, $R^{85}$, $R^{B6}$, $R^{B7}$) or one of the azo substituents ($R^{A2}$) (e.g., one of the phenyl substituents ($R^P$, e.g., $R^{P2}$ , $R^{P3}$, $R^{P4}$, $R^{P5}$, $R^{P6}$) or one of the naphthyl substituents (e.g., $R^{N1}$, $R^{N2}$, $R^{N3}$, $R^{N4}$, $R^{N5}$, $R^{N6}$, $R^{N7}$, $R^{N8}$)) is, or comprises, a probe or a linker linked to a probe.

In one embodiment, one of the benzo substituents ($R^B$, e.g., $R^{B4}$, $R^{B5}$, $R^{B6}$, $R^{B7}$) is, or comprises, a probe or a linker linked to a probe.

Alternatives for the remaining substituents, i.e., other than the one which is, or comprises a probe or a linker linked to a probe, are set out below.

*The Benzo Substituents ($R^B$)*

Each of the benzo substituents ($R^B$, $R^{B4}$, $R^{B5}$, $R^{B6}$, $B^{B7}$) is independently -H or as defined below for the substituents on the phenyl/naphthyl azo substituent, $R^P$ and $R^N$.

In one embodiment, one of the n $R^B$ groups, or one of $R^{B4}$, $R^{B5}$, $R^{B6}$, and $R^{B7}$ is an amino group ($-NH_2$) or a maleimido group.

In one embodiment, one of the n $R^B$ groups, or one of $R^{B4}$, $R^{B5}$, $R^{B6}$, and $R^{B7}$ is an amino group ($-NH_2$) or a maleimido group; and the remaining groups are -H.

In a preferred embodiment $R^{B6}$ is an amino group ($-NH_2$) or a maleimido group, which can be derivatised to a linker or nucleic acid, for example by standard Diels Alder or other amide linkage chemistry.

*The Azo Substituent ($R^{AZ}$)*

The azo substituent, $R^{AZ}$, is independently $C_{6-20}$carboaryl or $C_{5-20}$heteroaryl, and is optionally substituted.

In one embodiment, $R^{AZ}$, is independently monocyclic $C_6$carboaryl or $C_{5-7}$heteroaryl, and is optionally substituted.

In one embodiment, $R^{AZ}$, is independently bicyclic $C_{9-10}$carboaryl or $C_{8-14}$heteroaryl, and is optionally substi-

tuted.

In one embodiment, $R^{AZ}$, is independently bicyclic $C_{10}$carboaryl or $C_{9-10}$heteroaryl.

In one embodiment, $R^{AZ}$, is a group of the formula:

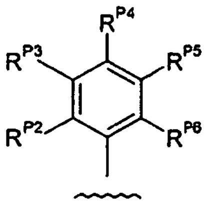

(A6)

wherein:

each of $R^{P2}$, $R^{P3}$, $R^{P4}$, $R^{P5}$, and $R^{P6}$ is independently -H or a phenyl substituent;

and optionally, two adjacent groups, selected from $R^{P2}$, $R^{P3}$, $R^{P4}$, $R^{P5}$, and $R^{P6}$ (e.g., $R^{P2}$ & $R^{P3}$, $R^{P3}$ & $R^{P4}$, $R^{P4}$ & $R^{P5}$, $R^{P5}$ & $R^{P6}$), together with the carbon atoms to which they are attached, form a fused ring (fused to the phenyl ring), having 5 or 6 ring atoms, including one or more heteroatoms selected from O, S, and N.

For example, in one embodiment, $R^{AZ}$, is a group of the formula:

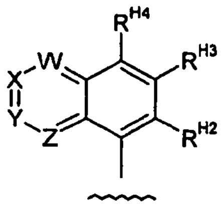

(A7)

wherein:

each of $R^{H2}$, $R^{H3}$, and $R^{H4}$ is independently -H or as defined below for the substituents on the phenyl/naphthyl azo substituent, $R^P$ and $R^N$; and, each of W, Y, Y, and Z is independently -CH=, -CR=, -N=, -O-, or -S-.

In one embodiment, $R^{AZ}$ is independently phenyl, naphth-1-yl, or naphth-2-yl, and is optionally substituted.

In one embodiment, $R^{AZ}$, is a group of one of the following formulae:

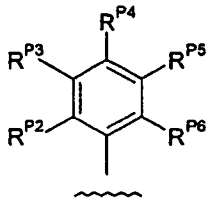

(A8-1)

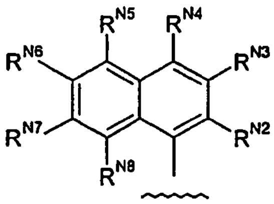

(A8-2)

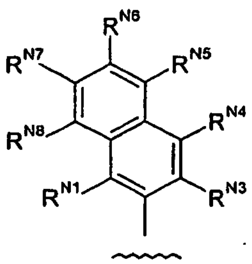

(A8-3)

wherein:

each of $R^{P2}$, $R^{P3}$, $R^{P4}$, $R^{P5}$, and $R^{P6}$ is independently -H or a phenyl substituent; and,

each of $R^{N1}$, $R^{N2}$, $R^{N3}$, $R^{N4}$, $R^{N5}$, $R^{N6}$, $R^{N7}$, and $R^{N8}$ is independently -H or a naphthyl substituent.

*The Substituents on the Phenyl/Naphthyl Azo Substituent ($R^P$ and $R^N$)*

In one embodiment, each of $R^{P2}$, $R^{P3}$, $R^{P4}$, $R^{P5}$, and $R^{P6}$, and each of $R^{N1}$, $R^{N2}$, $R^{N3}$, $R^{N4}$, $R^{N5}$, $R^{N6}$, $R^{N7}$, and $R^{N8}$ is independently -H or a group selected from:

$C_{1-7}$alkyl (e.g., -Me, -Et, -nPr, -iPr, -tBu);

$C_{2-7}$alkenyl (e.g., vinyl, allyl);

$C_{2-7}$alkynyl (e.g., propargyl);

$C_{3-10}$cycloalkyl (e.g., cyclohexyl);

$C_{3-10}$ycloalkenyl (e.g., cyclohexenyl);

$C_{6-20}$carboaryl (e.g., phenyl, napthyl);
$C_{5-10}$heroaryl (e.g., pyridyl);
halogen (e.g., -F, -Cl, -Br, -I);
carboxy (-COOH);
formyl (-CHO);
acyl (-C(=O)R) (e.g., -C(=O)Me, -C(=O)Ph);
amino-acyl (-C(=O)$NH_2$, -C(=O)NHR, -C(=O)$NR_2$) (e.g., -C(=O)NHMe);
amino-$C_{1-7}$alkyl (e.g., -$(CH_2)_nNH_2$, $(CH=)_nNHR$, -$(CH_2)_nNR_2$, n=1-6);
amino-methyl (-$CH_2NH_2$, -$CH_2NHR$, -$CH_2NR_2$) (e.g., -$CH_2NHMe$);
carboxy-$C_{1-7}$alkyl (e.g., -$(CH_2)_nCOOH$, n=1-6);
carboxy-methyl (-$CH_2COOH$);
hydroxy-$C_{1-7}$alkyl (e.g., -$(CH_2)_nOH$, n=1-6);
hydroxy-methyl (-$CH_2OH$);
oxy-$C_{1-7}$alkyl (e.g., -$(CH_2)_nOR$, n=1-6);
oxy-methyl (-$CH_2OR$) (e.g., -$CH_2OMe$);
halo-methyl (-$CH_2X$, -$CHX_2$, -$CX_3$) (e.g., -$CH_2F$, -$CF_3$);
amino (-$NH_2$, -NHR, -$NR_2$) (e.g., -$NMe_2$);
cycloamino (e.g., morpholino, piperidino, piperazino);
azido (-$N_3$);
nitroso (-NO);
nitro (-$NO_2$);
ethynyl (-C≡CH, -C≡CR) (e.g., -C≡CH, -C≡CMe);
imino-methyl (-CH=NH, -CH=NR) (e.g., -CH=NMe);
ketone-oxime (-C=N(OH)R);
cycloalkyl (-CHR(-$(CH_2)_n$-), n=2-7) (e.g., 1-methyl-cyclohex-1-yl);
urea (-NHCONHR) (e.g., -$NHCONH_2$, -NHCONHMe);
thiourea (-NHCSNHR) (e.g., -$NHCSNH_2$, -NHCSNHMe);
acyl-amino (-NHCOR) (e.g., -NHCOMe);
amino (-$NH_2$, -NHR, -$NR_2$) (e.g., -$NH_2$, -NHMe, -$NMe_2$);
hydroxy (-OH);
ether (-OR) (e.g., -OMe, -OPh);

phosphate (-OP(=O)$(OR)_2$) (e.g., -OP(=O)$(OH)_2$);
silyl (-$SiR_3$) (e.g., -$SiMe_3$, -$SiPh_3$);
sulfhydryl (-SH);
thioether (-SR) (e.g., -SMe);
disulfide (-SSR) (e.g., -SSMe);
sulfonic acid (-$SO_3H$);
selenide (-SeR) (e.g., -SeMe);
stannyl (-$SnR_3$) (e.g., -$SnMe_3$, -$SnPh_3$);
plumbyl (-$PbR_3$) (e.g., -$PbMe_3$, -$PbPh_3$);
wherein X is -F, -Cl, -Br, or -I; and,
wherein each R is independently H, $C_{1-7}$alkyl, $C_{2-7}$alkenyl, $C_{2-7}$alkynyl, $C_{3-10}$cycloalkyl, $C_{3-10}$cycloalkenyl, $C_{6-20}$carboaryl, or $C_{5-20}$heteroaryl.

In one embodiment, each of $R^{P2}$, $R^{P3}$, $R^{P4}$, $R^{P5}$, and $R^{P6}$, and each of $R^{N1}$, $R^{N2}$, $R^{N3}$, $R^{N4}$, $R^{N5}$, $R^{N6}$, $R^{N7}$, and $R^{N8}$ is independently -H or a group selected from: hydrogen; hydroxy; $C_{1-4}$alkoxy; amino; $C_{1-4}$alkyl-amino; nitro; cyano; $C_{1-7}$alkyl; $C_{3-10}$cycloalkyl; $C_6$carboaryl; $C_6$heteroaryl; halogen; carboxy; sulfonate; phosphate; and sulfhydryl.

In one embodiment, each of $R^{P2}$, $R^{P3}$, $R^{P4}$, $R^{P5}$, and $P^{P6}$, and each of $R^{N1}$, $R^{N2}$, $R^{H3}$, $R^{N4}$, $R^{N5}$, $R^{N6}$, $R^{N7}$, and $R^{N8}$ is independently -H or a group selected from: hydrogen; hydroxy; $C_{1-4}$alkoxy; amino; $C_{1-4}$alkyl-amino; nitro; and cyano.

In one embodiment, each of $R^{P2}$, $R^{P3}$, $R^{P4}$, $R^{P5}$, and $R^{P6}$, and each of $R^{N1}$, $R^{N2}$, $R^{N3}$, $R^{N4}$, $R^{N5}$, $R^{N6}$, $R^{N7}$, and $R^{N8}$ is independently selected from: -H, -OH, -OMe, -$NH_2$, -$NO_2$, and -CN.

In one embodiment, each of $R^{P2}$, $R^{P3}$, $R^{P4}$, $R^{P5}$, and $R^{P6}$, and each of $R^{N1}$, $R^{N2}$, $R^{N3}$, $R^{N4}$, $R^{N5}$, $R^{N6}$, $R^{N7}$, and $R^{N8}$ is independently selected from: -H, -OH, -OMe, and -$NH_2$.

*Phenyl-Azo-1H-9enzotriazoles*

In one embodiment, $R^{AZ}$, is a group formula (A8-1).

In one embodiment, exactly 4 of $R^{P2}$, $R^{P3}$, $R^{P4}$, $R^{P5}$, and $R^{P6}$ are -H. In one embodiment, exactly 3 of $R^{P2}$, $R^{P3}$, $R^{P4}$, $R^{P5}$, and $R^{P6}$ are -H. In one embodiment, exactly 2 of $R^{P2}$, $R^{P3}$, $R^{P4}$, $R^{P5}$, and $R^{P6}$ are -H. In one embodiment, exactly 1 of $R^{P2}$, $R^{P3}$, $R^{P4}$, $R^{P5}$, and $R^{P6}$ is -H.

In one embodiment, exactly 4 of $R^{P2}$, $R^{P3}$, $R^{P4}$, $R^{P5}$, and $R^{P6}$ are -H; and the remaining 1 is -OMe.

In one embodiment, exactly 2 of $R^{P2}$, $R^{P3}$, $R^{P4}$, $R^{P5}$, and $R^{P6}$ are -H; and each of the remaining 2 is -OMe.

In one embodiment, $R^{AZ}$, is selected from:

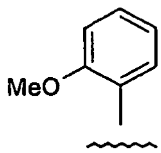 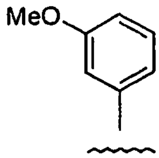 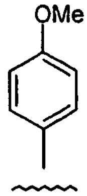

(A9-1)

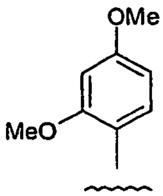 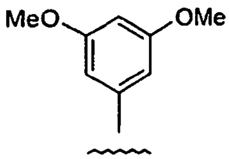 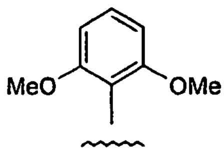

(A9-2)

In one preferred embodiment, $R^{P3}$ and $R^{P5}$ are both -OMe; and, $R^{P2}$, $R^{P4}$, and $R^{P6}$ are -H:

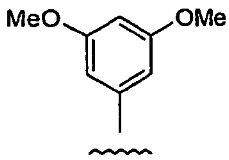

(A9-3)

*Naphthyl-Azo-1H-Benzotriazoles*

In one embodiment, $R^{AZ}$, is a group formula (A8-2) or formula (A8-3).

In one embodiment, $R^{AZ}$, is a group formula (A8-2).

In one embodiment, exactly 6 of $R^{N2}$, $R^{N3}$, $R^{N4}$, $R^{N5}$, $R^{N6}$, $R^{N7}$, and $R^{N8}$ are -H.

In one embodiment, exactly 5 of $R^{N2}$, $R^{N3}$, $R^{N4}$, $R^{N5}$, $R^{N6}$, $R^{N7}$, and $R^{N8}$ are -H.

In one embodiment, exactly 6 of $R^{N1}$, $R^{N3}$, $R^{N4}$, $R^{N5}$, $R^{N6}$, $R^{N7}$, and $R^{N8}$ are -H.

In one embodiment, exactly 5 of $R^{N1}$, $R^{N3}$, $R^{N4}$, $R^{N5}$, $R^{N6}$, $R^{N7}$, and $R^{N8}$ are -H.

In one embodiment, exactly 6 of $R^{N1}$, $R^{N3}$, $R^{N4}$, $R^{N5}$, $R^{N6}$, $R^{N7}$, and $R^{N8}$ are -H; and the remaining 1 is -OMe, -CN, or $-NO_2$.

In one embodiment, exactly 6 of $R^{N1}$, $R^{N3}$, $R^{N4}$, $R^{N5}$, $R^{N6}$, $R^{N7}$, and $R^{N8}$ are -H; and the remaining 1 is -OMe.

In one embodiment, $R^{AZ}$, is selected from:

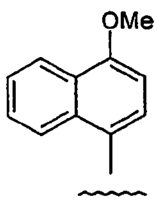 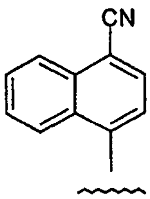 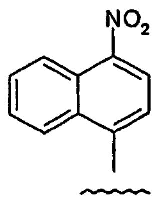

(A10)

*Some Preferred Compounds*

A preferred compound (before being linked to the probe) is as follows:

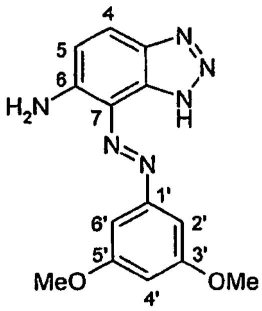

(A11)

In this and similar compounds, a methoxy group is preferred to nitro or nitrile groups (being an electron-donating group versus electron-withdrawing groups) and dimethoxy is preferred to monomethoxy. 3',5'-substitution is preferred to 2',4'-substitution for the disubstituted ring system. This dye has the amine group for facilitating linkage to a probe (see below).

*Synthesis*

Appropriate chemistry to derivatise the fluorophore and/or dye to the probe will be well known to those skilled in the art and does not *per se* form a part of the present invention.

The dyes and SSGs of the present invention may also be conjugated to the second arm using other standard chemistry, e.g., addition of a maleimide dervivative to a butadiene phosphoramidite group. For example, the synthesis of the SERRS Beacon is illustrated in Scheme 1 (Figure 5). Here, a 3'-fluorescein solid support is used to synthesise the oligonucleotide sequence of the probe using standard phosphoramidite chemistry. At the 5'-terminus a butadiene phosphoramidite is used to provide a moiety for selective post-synthetic addition of the second dye label. A benzotriazole azo dye maleimide is added to the oligonucleotide via Diels Alder cycloaddition. This allows a range of label pairs to be created by use of different azo maleimides that give different SERRS signals and hence increase the multiplexing capacity.

*Alternative SSGs*

An alternative to the triazole- and benzotriazole-based SSGs is shown in Formula A12, wherein $R^9$ may be a substituent as defined for $R^{10}$ below, or is, or comprises, a probe or a linker linked to a probe.

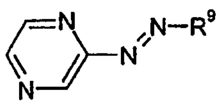

(A12)

Functional groups on the surface seeking portion of the agents may include charged polar groups (e.g., amine, carboxyl, phosphate, thiol, hydroxyl), attracted to the surface or surface coating (e.g., to free amine groups in a polyamine coating).

Examples of these are shown in Formula A13, wherein $R^9$ is as defined above, and each $R^{10}$ is independently selected from -H and $-(CH_2)_n-Q$, wherein Q is -COOH, $-PPh_2$, -SH, $-NH_2$, or -OH, and n is 0, 1, 2, 3, or 4, with no more than 3 of the $R^{10}$ groups in the formula being -H. Preferably the $R^{10}$ groups in the formula, other than those which are H, are all the same, as exemplified by Formulae A14 and A15.

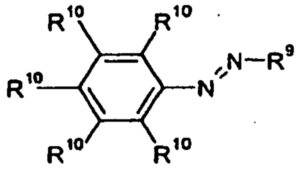

(A13)

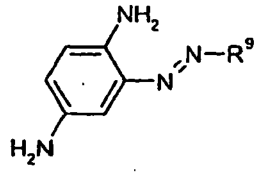

(A14)

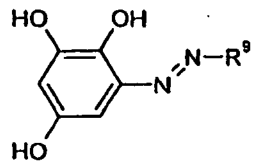

(A15)

Further alternative surface seeking groups (SSGs) are shown in Formulae A16, A17, and A18, in which X is N or C, and $R^{11}$ is -Ph-N=N-$R^{AZ}$ or -$CH^2$-Ph-N=N-$R^{AZ}$:

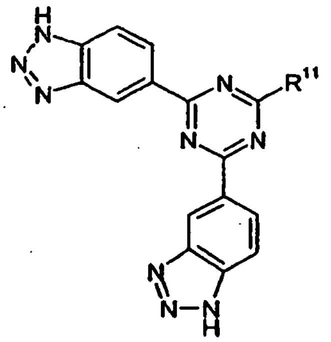

(A16)

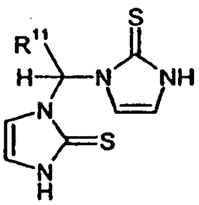

(A17)

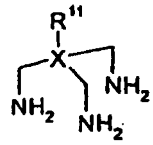

(A18)

Other suitable surface seeking groups for the agent include the calixerenes and the mercapto benzotriazoles.

*Metal surface*

The "metal surface" is any metal surface suitable for carrying out SERS. A range of metal surfaces have been used in the art to provide the surface enhancement, including citrate reduced silver nanoparticles[8,9] and a PVA/silver film.[10] The silver /PVA films are robust, easily handled, and allow accurate spotting of the SERS Beacon due to the hydrophilic nature of the PVA surface preventing uncontrollable spreading of the spot.

Preferably the metal surface is provided by colloidal metal particles, or a solid surface i.e. the probes can be used both in solution state probes or in a surface array

*Processes for producing agents*

In a further aspect of the invention there is disclosed a method of producing a detection agent for use in a method as described herein comprising:

(i) providing a probe comprising

- a target complement sequence (TCS) being complementary to the target sequence to be detected;
- flanking the TCS, first and second oligonucleotide arms,
  said first and second oligonucleotide arms forming a stem duplex,
  and said first arm incorporating a first label moiety being detectable by surface enhanced Raman spectroscopy (SERS)
  and said second arm terminating in a second label moiety being detectable by SERS,
  which second arm further includes a surface seeking group (SSG) capable of promoting association of the second label onto a metal surface

(ii) associating said probe with a metal surface via the SSG of the probe, such that said first and second label moieties are in close proximity to each other and to the metal surface

Preferably said first arm incorporate a first label moiety being detectable by fluorescence and surface enhanced Raman spectroscopy (SERS).

In a further aspect of the invention there is disclosed a method of producing a probe for use in a detection agent as described herein comprising:

(i) synthesising a nucleic acid comprising

- a target complement sequence (TCS) being complementary to the target sequence to be detected;
- flanking the TCS, first and second oligonucleotide arms,
  said first and second oligonucleotide arms being capable of forming a stem duplex,
  wherein said nucleic acid is synthesised in a 3' to 5' direction,
  and wherein the 3' terminus of the nucleic acid is tethered to a solid support via a first label moiety being detectable by surface enhanced Raman spectroscopy (SERS),

(ii) following synthesis of said nucleic acid, conjugating to the 5' terminus of the nucleic acid, a second label moiety being detectable by SERS, and including a surface seeking group (SSG) capable of promoting association of the second label onto a metal surface.

Preferably first label moiety being is detectable by fluorescence and surface enhanced Raman spectroscopy (SERS)

The first and second label moieties may be any discussed herein e.g. the first label moiety may be FAM, and the second label moiety may be an azo benzotriazole (see e.g. Scheme 1).

The conjugation to the 5' terminus may employ standard derivatisation chemistry e.g. phosphoramidite chemistry commonly used in nucleic acid synthesis and\or Diels Alder cycloaddition e.g. based on butadiene\maleimide addition (see refs 18-20).

In an alternate embodiment the 3' terminus of the nucleic acid is tethered to a solid support via the second label moiety, and the first label moiety (being detectable SERS and optionally also by fluorescence) is added at the 5' terminus. In this case it is preferred that a diene solid support is used to attach the first label moiety (e.g. benzotriazole dye) to the 3' terminus.

*Multiplexing*

In preferred embodiments more than one target sequence is determined using multiple detection agents having distinguishable detection characteristics.

The fact that hybridisation of the beacon gives rise to two different signals (the SERRS of the second label moiety, without the influence of the first label moiety, and the fluorescence of the first label moiety) means it is particularly effective in multiplexing - by utilising combinations of different labels, or use of different labelling chemistries as discussed below.

Thus in one embodiment of the invention there is provided a method as described herein for determining the presence or absence of two or more target nucleic acid sequences in a sample nucleic acid, the method comprising:
providing a plurality of detection agents as described above, where each agent comprises a target complement sequence (TCS) complementary to one of said target sequences;
and wherein detection of hybridisation of each TCS to its corresponding target sequence present in the sample is detected by a change in the SERS spectra (and optionally fluorescence), of each agent,
which change is distinctive to each agent.

Thus in general the agents of the method not only have specific TCSs, but also have distinguishable (by SERS spectra and\or fluorescence) first label moieties, or second label moieties, or both first and second label moieties. As discussed herein, the present invention is particularly effective in multiplexing since the same fluorophore can be used with different dyes, as can different fluorophores with the same dye.

In particular, multiplexing capacity can be increased based on the chemistry of the preferred embodiments discussed herein. Thus (by way of example only), Scheme 1 shows a 3' FAM was used with one benzotriazole azo dye. The nature of the 5'-labelling means that once the diene modified beacon sequence has been synthesised a range of different maleimide dye quenchers can be used to increase the multiplexing capacity of the SERRS Beacons due to the different SERRS signals from structurally similar dyes. A further degree of multiplexing can be obtained by changing the diene used to generate a different cycloadduct with the range of dye maleimides.[22] Cycloadducts made from either different dyes and the same diene or different dienes and the same maleimide give distinctly different SERRS signals thus allowing a high degree of multiplexing by using only the one fluorescent dye. Obviously changing the identity of the fluorescent dye can increase this degree of multiplexing further as this also gives different SERRS codes.

In a further aspect of the invention there is disclosed a detection agent, as described herein, comprising:

(i) a probe comprising

- a target complement sequence (TCS) being complementary to the target sequence;
- flanking the TCS, first and second oligonucleotide arms, said first and second oligonucleotide arms forming a stem duplex,
  and said first arm incorporating a first label moiety being detectable by fluorescence and surface enhanced Raman spectroscopy (SERS)
  and said second arm terminating in a second label moiety being detectable by SERS,
  which second arm further includes a surface seeking group (SSG) capable of promoting association of the second label onto a metal surface

(ii) associated with said probe via said SSG, a metal surface, such that said first and second label moieties are in close proximity to each other and to the metal surface

In a further aspect there is disclosed a composition comprising two or more detection agents as described above, each having distinctive TCSs and distinctive first and\or second label moieties.
The agents or compositions of the present invention will generally be provided as solutions.

*Further aspects of the invention*

As discussed in the Introduction, the methods may have numerous applications in genomics, whereby they can be used analogously to existing methods which employ a step in which nucleic acid sequence is analysed (see e.g. "Principles of Genome Analysis" by S B Primrose, Pub. Blackwell Science, Oxford, UK, 1995).
Molecular Beacons have been used in a wide number of applications to date, mainly involving PCR (Piatek, A. S.; Tyagi, S.; Pol, A. C.; Telenti, A.; Miller, L. P.; Kramer, F. R.; Alland, D. Nat. Biotechnol. 199 8, 16, 359-363; Park, S.; Wong, M.; Marras, S. A. E.; Cross, E. W.; Kiehn, T. E.; Chaturvedi, V.; Tyagi, S.; Perlin, D. S. Journal of Clinical Microbiology 2000, 38, 2829-2836) but have also recently been used as intracellular probes for mRNA (Bratu, D. P.; Cha, B. J.; Mhlanga, M. M.; Kramer, F. R.; Tyagi, S. Proc. Natl. Acad. Sci. USA 2003, 100, 13308-13313).
Some specific applications are as follows. Generally speaking all of these can be carried out using the single target sequence, or multiplexing approach. In the latter case, the combination of various results may be used to make a determination:

(i) Detection of the presence of an organism (e.g. virus, provirus, virion, prokaryote (such as bacterium), eucaryote (such as protozoan)) in a sample wherein the presence of the target sequence is associated with the presence of the organism, for instance because the sequence is unique to that organism.
Even in cases where the sequence probed may not actually be unique to the organism, its presence (in conjunction with other diagnostic information e.g. immunological, behavioural etc.) may be used to increase the certainty of a determination of its presence of absence. The detection may be confirmed where still further certainty is required by full sequencing.
The sample in this case can be anything suspected of containing the organism e.g. a sample taken from a different organism, a foodstuff, an environmental sample (e.g. soil, water etc.) The organism may be pathogenic, or may simply be associated with some other quality of interest.

(ii) Diagnosis of a disease associated with a pathogenic organism, by carrying out a determination as described above. The sample may be *in vitro* or in vivo. The test may be carried out in conjunction with other diagnostic techniques, or an assessment of symptoms etc.

(iii) Diagnosis of a disease associated with a DNA variation, by detecting the presence of the DNA variant comprising use of a method as discussed above wherein the target sequence corresponds to the sequence in which the variation occurs. The test may be carried out in conjunction with other diagnostic techniques, or an assessment of symptoms etc.

(iv) A method of selecting an non-human organism having a particular phenotypic trait whereby the target sequence corresponds to a sequence associated with that trait.

(v) A method of isolating a nucleic acid encoding a specific gene whereby the target sequence corresponds to a

sequence associated with, or within, that gene.

(vi) A method of phylogenetic classification of non-human, wherein the target sequence is associated with a particular individual, population, species, genus etc.

(vii) A method of identifying an individual wherein the target sequence is associated with that individual. Generally speaking this may entail scoring a number of discrete polymorphisms (see e.g. WO 96/01687 of Tully et al for sequences used in forensic typing and matching).

(viii) A method of expression profiling a cell or tissue. In this case the sample nucleic acid is mRNA, or is derived from it (e.g. cDNA).

In a further aspect there is disclosed a kit comprising the agents or compositions of the present invention, plus one or more additional materials for practising the methods of the present invention e.g. target nucleic acid for control experiments.

In a further aspect there is disclosed a system comprising an agent or composition described above plus a nucleic acid sample, which is preferably a sample of DNA or RNA, most preferably extracted from a cell taken from or constituting an organism.

Such a system may particularly comprise:

(i) a reaction vessel,
(ii) an agent as described above,
(iii) a nucleic acid.

preferably in a homogenous format.

In a further aspect there is disclosed an apparatus comprising a SERRS analyser plus an agent, composition or system as described above, and methods of use of such an apparatus, comprising (for instance) the steps of preparing and monitoring (e.g. at between 500 and 600 nm) a homogenous system in order to detect a SERS signal.

The invention will now be further explained with reference to the following non-limiting Figures and Examples. Other embodiments falling within the scope of the present invention will occur to those skilled in the art in the light of these.

<u>Figures</u>

Figure 1 - The concept of a SERS Beacon, in this case a SERRS Beacon. The Beacon is initially produced with a 3'-fluorescein label and a 5'-benzotriazole azo dye. The azo dye has been designed to complex to silver metal surfaces and produce SERRS.
In the closed state the SERRS Beacon does not give fluorescence but gives SERRS signals corresponding to the presence of both the FAM and the azo dye when attached to a suitable silver surface such as silver nanoparticles. After hybridisation the Beacon opens and now only the benzotriazole azo dye is attached to the silver. The FAM is removed from the quenching action of the azo and the silver and free to emit fluorescence. Additionally the SERRS signals show a change from the presence of two labels to that of only the azo dye indicating the exact match of the complementary sequence. When a complementary sequence with a single mismatch is used the Beacon does not open and as such there is no fluorescence and the SERRS signals show the presence of both labels.

Figure 2 - SERRS spectra of the SERRS Beacon using silver nanoparticles. Data was acquired using 514.5 nm excitation and two scans with an accumulation time of ten seconds. A - The closed SERRS Beacon B - with the exact complementary sequence C - with a single base mismatched sequence D - with a control nonsense sequence. The spectra have been offset for ease of viewing and the spectrum in B has been scaled by a factor of three for clarity.

Figure 3 - SERRS spectra of the SERRS Beacon using a silver/PVA film. Each scan was acquired using 514.5 nm excitation and three scans with a three second accumulation time. A - The closed SERRS Beacon B - with the exact complementary sequence C - with a single base mismatched sequence D - with a control nonsense sequence.

Figure 4 - quenching of FAM by two dyes as described in Example 5. Spectra are fluorescence emission using 492 excitation. The spectra are in the same order (top to bottom) as the key.

Figure 5 - Scheme 1 showing synthesis of the SERRS Beacon. A 3'-FAM solid support was used to synthesize the oligonucleotide sequence of the probe using standard phosphoramidite chemistry. At the 5'-terminus a butadiene phosphoramidite was used to provide a moiety for selective post synthetic addition of the second dye label. A benzotriazole azo dye maleimide was added to the oligonucleotide via Diels Alder cycloaddition. This allows a range of label pairs to be created by use of different azo maleimides that give different SERRS signals and hence increase the multiplexing capacity.

Figure 6 - SERRS spectra of the SERRS Beacon at 3.7 x $10^{-8}$ $moldm^{-3}$ using silver nanoparticles and spermine. A - the Beacon with a 3'-FAM dye and butadiene at the 5'-terminus and B - the Beacon with a 3'-FAM dye and the benzotriazole azo dye at the 5'-terminus. The spectra have been scaled for clarity. (A x 5 and B /10 - 17000)

Example 1 - Design and Synthesis of SERRS Beacons

The SERRS Beacon requires a label at each terminus and this has affected the design of the probes. There are a number of commercially available fluorophores for 5' labelling but we had to add our specifically designed surface complexing dye, which is easier at the 5'-terminus. So far we have developed methods for achieving this at the 5'-terminus via a number of methods[18,20] and now favour Diels Alder cycloaddition.[19] However, this meant that a 3'-fluorophore was required.

A 3'-FAM solid support was used to synthesise the molecular beacon sequence and a special 5'-butadiene monomer added at the 5'-terminus as the final addition during solid phase synthesis (see Scheme 1). The butadiene residue allows Diels Alder cycloaddition to be used to conjugate molecules such as labels to the end of the oligonucleotides in a convenient and high yielding manner.

We have a wide range of dyes that can be added to oligonucleotides in this way and chose the dye reported here (pABT) as in quenching experiments we found it to have a higher quenching constant than DABCYL when used with FAM. (97% versus 88% - see Example 4 below). The additional important property of this dye is the presence of the benzotriazole group. Previously we have demonstrated that benzotriazole azo dyes are excellent analytes for SERRS due to their ability to complex to the silver surface used to provide the surface enhancement.16,17

Figure 6 shows the comparison of the SERRS from the SERRS Beacon with and without the benzotriazole dye using silver nanoparticles and spermine. The spectrum from the closed Beacon with only the butadiene at the 5'-end shows very weak SERRS signals corresponding to the FAM and a strong fluorescent background. This is in contrast to the SERRS obtained from the Beacon labeled with both the FAM and the benzotriazole azo dye. In this case, strong SERRS signals are observed and the fluorescent background has disappeared. Thus, this means that for the SERRS Beacon the quenching of the closed beacon is better than that of a FAM-DABCYL beacon, however, the SERRS Beacon has the ability to complex to a silver surface, which further quenches the fluorescence. This quenching ability has been measured for a Molecular Beacon attached to a gold nanoparticle via a phosphine ligand and is almost 100%.[5] This means that the fluorescent background is almost nothing when the beacon is closed and attached to a silver surface.

The use of Diels Alder allows the synthesis of the basic beacon but the option of varying the dye used for surface immobilisation.

In other embodiments, a solid support such as a diene solid support may be used to attach the benzotriazole dyes to the 3'-terminus, permitting use of the more widely available fluorophores for 5'-labelling.

Example 2 - Analysis of the SERRS Beacon on Silver Nanoparticles

As discussed above, in the SERRS Beacon a strong SERRS signal is generated when the beacon is closed that shows the presence of both the FAM and the pABT dye. This occurs as the pABT dye immobilises the SERRS Beacon on the nanoparticle and forces the FAM to be close to the surface and produce SERRS. In the absence of the surface seeking dye, a FAM labelled oligonucleotide would give poor SERRS as the FAM would not adsorb well onto the silver. In the SERRS Beacon the FAM signals actually dominate as FAM gives stronger signals than the pABT dye by approximately two orders of magnitude.

Under these conditions (2 x $10^{-7}$ M) we could not detect any fluorescence using a Cary Ecllipse fluorimeter, a Stratagene MX4000 fluorescence plate reader and a Renishaw Raman spectrometer.

A complementary sequence with overhanging bases was added to the SERRS Beacon and the SERRS recorded. The spectra clearly show a considerable change in the SERRS spectrum with the loss of the FAM signals allowing the pABT signals to be observed. In addition, fluorescence can now be observed with a maximum of 550 $cm^{-1}$, which corresponds to 514.6 nm as expected for FAM when using excitation at 514.5 nm.

To investigate the sequence specificity two-control sequences were used. One was a nonsense sequence that was not expected to hybridise at all and the other was the complementary sequence as used to open the SERRS Beacon but with a single base mismatch.

The spectra shown in Figure 2 clearly show that there is no change from the closed SERRS Beacon with the control oligonucleotide indicating a lack of molecular recognition. The complementary sequence with a single base mismatch displays a more interesting spectrum. There is no indication of any fluorescence indicating that the SERRS Beacon has not opened up to remove the FAM away from the quenching effect of the dye and the silver. However, there are changes in the relative intensities of several SERRS peaks indicating that the conformation of the Beacon on the surface has changed. We attribute this to part of the Beacon loop sequence hybridising but not enough to generate an open state. These spectra were all obtained at room temperature in a standard molecular beacon buffer with spermine added. In the example described there was certainly sufficient information from the SERS spectrum to infer whether DNA hybridisation had occurred in a sequence specific manner. Nevertheless the spectral changes which occurred suggest that the beacons may also have utility in looking at interactions of DNA with other biomolecules such as proteins. In such cases the DNA may interact with the protein but not to a degree that opens up the Beacon. Thus the change in the SERS signals will indicate the interaction but not give rise to a change in fluorescence.

Example 3 - Analysis of the SERRS Beacon on Silver PVA Film

To investigate different formats that could be used with the SERRS Beacon a silver /PVA surface was used as the substrate to give the additional quenching and generate the SERRS. The surface used was one that has been used in several SERRS experiments. For example use by Vo-Dinh et *al.*[10] was as a surface for a SERRS Biochip and we have subsequently showed its use for the obtaining SERRS from benzotriazole dye labelled oligonucleotides.[19] The silver /PVA film is robust, easily handled and allows accurate spotting of the SERRS Beacon due to the hydrophilic nature of the PVA surface preventing uncontrollable spreading of the spot. In this application, the surface was modified to contain the SERRS Beacon, which was added to the surface in a buffered solution and left for 20 minutes prior to washing with water several times. The same experiments as used with the nanoparticles were repeated on the silver film and the spectra acquired (see Figure 3). As with the nanoparticles the exact complement of the Beacon gave very distinct changes in the SERRS spectrum. In this Example, and on a solid surface, change in fluorescence proved to be a less effective indicator of hybridisation than was observed with nanoparticles, possibly due to there being less buffered solution into which the probe could to move freely away from the surface. However the fact that the SERRS have altered as expected indicate the different nature of the opened Beacon on the surface. The single base mismatch sequence and the nonsense control did not show any change in the spectrum demonstrating the specificity of the Beacon.

Example 9 - Analysis of different dyes as fluorescence quenchers

In SERRS beacons incorporating fluorophores, the surface seeking SERRS label preferably has the effect of quenching the fluorescence from the fluorophore when both are present on the metal surface. In order to investigate and optimise SERRS labels, a range were prepared, and their quenching properties were compared with TAMRA and DABSYL against two fluorophores - FAM and Cy5.

Two different concentrations of fluorophore dye solution ($1x10^{-7}$M and $5x10^{-8}$M) and six solutions of differing quencher dye concentration ($1x10^{-7}$M to $1x10^{-8}$M) were prepared in 15% DMF, 15% acetonitrile, 70% water. Fluorophore-quencher mixtures were prepared using 1.5 ml of $1x10^{-7}$M fluorophore so as to give a final fluorophore concentration equal to $5x10^{-8}$M and desired quencher concentration. The fluorescence emission spectra of the low concentration fluorophore solution and that of the fluorophore-quencher mixtures were measured three times. An integral of an area under the curve was taken for each measurement and then averaged. This data was then used in the following equation to obtain the quantum yield of the quencher,

$$\phi_u = (A_s/A_u) * (F_u/F_s) * (n_u/n_s)^2 * \phi_s$$

where:

$\phi$ = the quantum yield;
A = absorbance of the dye at the excitation wavelength;
F = area under the spectrum;
n = refractive index of the solution;
and the subscript s and u refer to the standard and sample solutions respectively.

This information for each quencher concentration was then used to determine the quenching constant, $K_s$, for each dye. This was achieved using the equation below to plot a graph for each quencher dye so that the slope of the

graph would be equal to the value of $K_s$,

$$\phi_{f^\circ} / \phi_f = K_s C_q + 1$$

where:

$\phi_{f^\circ}$ = quantum yield of fluorophore solution;

$\phi_f$ = quantum yield of fluorophore - quencher mixture solution;

$C_q$ = concentration of quencher in solution;

$K_s$ = quenching constant.

The value of $K_s$ was the major tool used for comparison of quenching ability in this study.

The quantum yield data for the quencher concentration of $5 \times 10^{-8}$M was also used to calculate a percentage quantum yield for the quencher. This was done to give a more easily understood value for the quenching efficiency of the dye. It was calculated at an equal concentration to that of the fluorophore to give a representative value. The equation used was,

$$\% \text{ eff} = [(\phi_{f^\circ} - \phi_f) / \phi_{f^\circ}] * 100.$$

A number of different dyes were studied in order to determine if structural differences influence the quenching ability. Mono-substituted and di-substituted dyes with methoxy, nitro and nitrile substitutions were investigated as was the substitution of a maleimide group for an amine and the position of the azo link.

The solutions of dyes were made in water with an addition of DMF and acetonitrile.

The structures of the dyes are shown below. "MI" denotes the maleimide derivative.

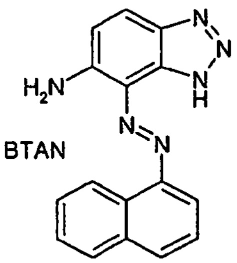
BTAN

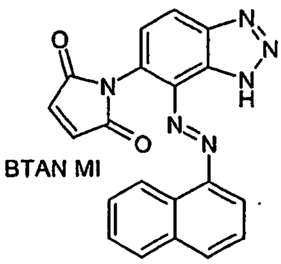
BTAN MI

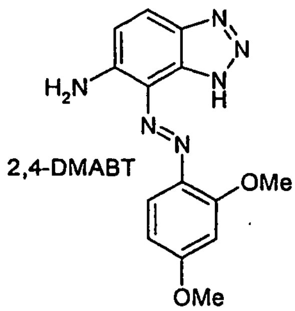
2,4-DMABT

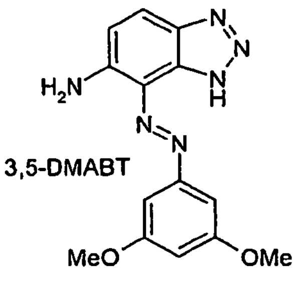
3,5-DMABT

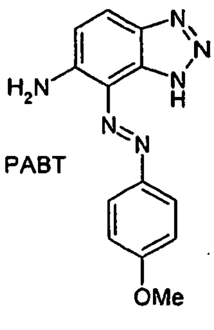
PABT

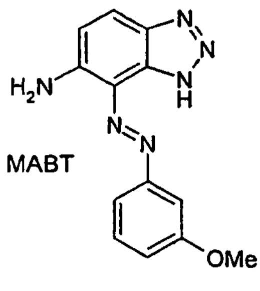
MABT

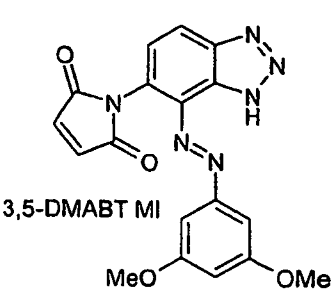

3,5-DMABT MI

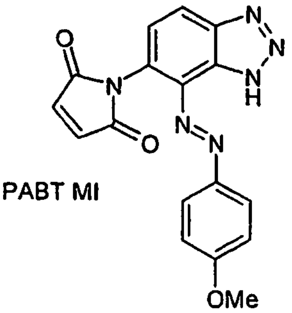

PABT MI

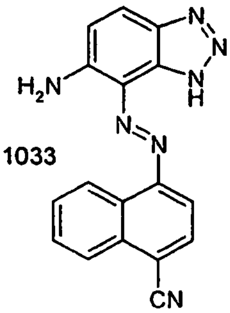

AE 1033

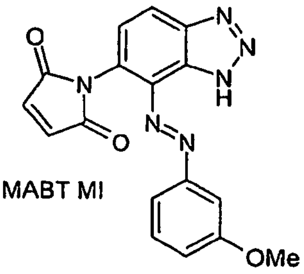

MABT MI

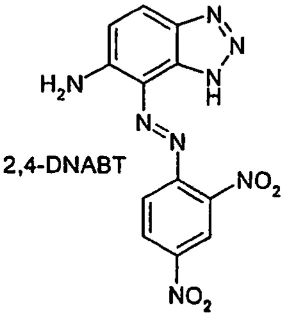

2,4-DNABT

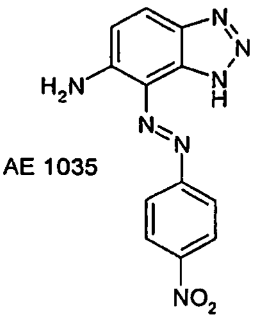

AE 1035

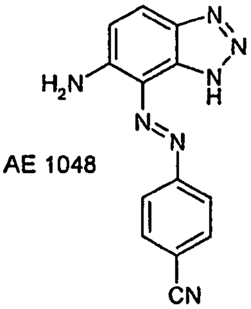

AE 1048

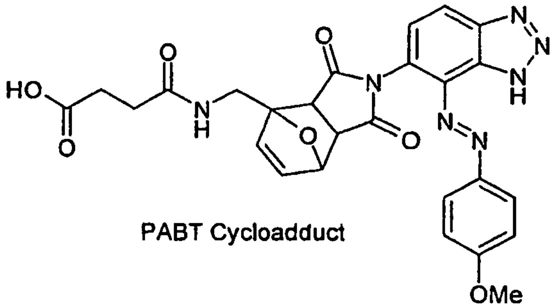

PABT Cycloadduct

GM 19

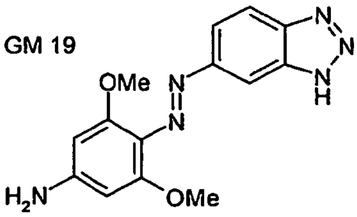

RB 1

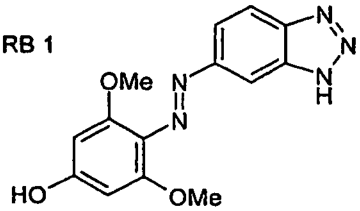

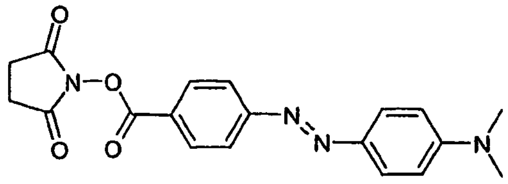

DABCYL Succinyl ester

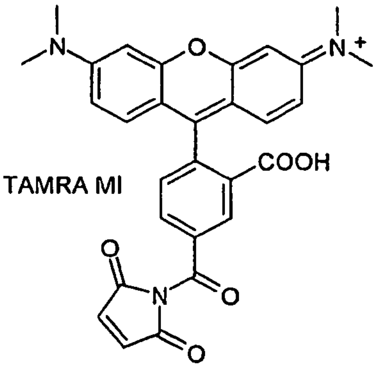

TAMRA MI

The following Table shows the calculated Ks and percentage efficiencies for quencher dyes with FAM.

| # | Quencher | Ks | % Efficiency |
|---|---|---|---|
| 1 | 3,5-DMABT | $1.32 \times 10^9 \pm 8$ | 98.3 |
| 2 | TAMRA MI | $1.08 \times 10^9 \pm 4$ | 98.2 |
| 3 | 3,5-DMABT MI | $9.82 \times 10^8 \pm 8$ | 97.7 |
| 4 | 2,4-DNABT | $8.20 \times 10^8 \pm 6$ | 97.9 |
| 5 | 2,4-DMABT | $8.10 \times 10^8 \pm 8$ | 97.0 |
| 6 | PABT MI | $5.76 \times 10^8 \pm 3$ | 96.7 |
| 7 | BTAN | $4.73 \times 10^8$ t 3 | 95.9 |
| 8 | PABT cyclo | $4.32 \times 10^8 \pm 3$ | 95.5 |
| 9 | MABT MI | $3.59 \times 10^8 \pm 3$ | 94.3 |
| 10 | PABT | $2.92 \times 10^8 \pm 2$ | 93.5 |
| 11 | BTAN MI | $2.06 \times 10^8 \pm 2$ | 90.9 |
| 12 | DABCYL MI | $1.83 \times 10^8 \pm 2.4$ | 87.9 |
| 13 | AE 1048 | $1.82 \times 10^8 \pm 1.6$ | 89.4 |
| 14 | AE 1033 | $1.78 \times 10^8 \pm 2$ | 89.2 |
| 15 | GM 19 | $1.45 \times 10^8 \pm 2.5$ | 83.0 |
| 16 | MABT | $1.06 \times 10^8 \pm 1.2$ | 83.4 |
| 17 | AE 1035 | $9.71 \times 10^7 \pm 1.2$ | 82.6 |
| 18 | RB 1 | $5.36 \times 10^7 \pm 1$ | 69.3 |

It can be concluded from the results that for mono-substituted methoxy groups, the maleimide substitution gives the best quenching, the cycloadduct less so and the amine group is the least efficient. The opposite is true for the naphthyl substituted dyes, BTAN & BTAN MI, where the amine substituted dye is more efficient than the maleimide. This could be due to the size of the dye molecule.

For di-methoxy substituted dyes the quenching efficiency of the amine is higher than for the maleimide substitution, this could again be due to the size of the dye molecule.

It can be seen for the di-methoxy substituted dyes that substitution at the 3',5'- positions is more effective than substitutions at the 2',4'- positions. For mono-methoxy substituted dyes it can be seen that quenching is far more efficient in the para position than when substituted in the meta position.

It is apparent for all dyes that di-substitution makes quenching more efficient than mono-substitution. This can be observed for both the methoxy and nitro group substitutions.

While it has been observed that the greatest quenching efficiency is obtained using di-methoxy substituted

dyes only a small difference is observed between di-methoxy and di-nitro dyes substituted with the same isomerisation. The same is found for the difference between mono-substituted dyes, substituted at identical positions.

Methoxy functionalised dyes are better quenchers than nitro but there is only a small difference in $K_s$ values.

The following Table shows the calculated Ks and percentage efficiencies for the quencher dyes with Cy5:

| # | Quencher | Ks | % Efficiency |
|---|---|---|---|
| 1 | TAMRA MI | $8.41x10^8 \pm 2.4$ | 97.7 |
| 2 | 3,5-DMABT MI | $8.11x10^8 \pm 2$ | 97.5 |
| 3 | 3,5-DMABT | $5.91x10^8 \pm 1.6$ | 96.8 |
| 4 | 2,4-DMABT | $5.80x10^8 \pm 5$ | 96.5 |
| 5 | MABT MI | $4.25x10^8 \pm 2$ | 95.6 |
| 6 | BTAN | $4.15x10^8 \pm 1$ | 95.3 |
| 7 | PABT MI | $3.86x10^8 \pm 4$ | 94.7 |
| 8 | BTAN MI | $3.01x10^8 \pm 1.6$ | 93.8 |
| 9 | PABT cyclo | $2.92x10^8 \pm 1.6$ | 93.4 |

| # | Quencher | Ks | % Efficiency |
|---|---|---|---|
| 10 | AE 1048 | $2.61x10^8 \pm 1.4$ | 92.8 |
| 11 | DABCYL | $1.68x10^8 \pm 1$ | 89.2 |
| 12 | PABT | $1.63x10^8 \pm 1$ | 89.0 |
| 13 | AE 1033 | $1.59x10^8 \pm 1$ | 88.4 |
| 14 | MABT | $1.32x10^8 \pm 1$ | 97.1 |
| 15 | 2,4-DNABT | $8.56x10^7 \pm 1$ | 79.4 |
| 16 | AE 1035 | $7.22x10^7 \pm 1.2$ | 81.8 |
| 17 | GM 19 | $6.56x10^7 \pm 1$ | 76.4 |
| 18 | RB 1 | $4.43x10^7 \pm 1$ | 66.7 |

The trend showing that maleimide substitution is more efficient than the cycloadduct and that more than the amine substituted dyes was observed again with the BTAN and BTAN MI also behaving the opposite way again.

This study confirmed that di-substituted dyes are more efficient quenchers than their mono-substituted equivalents for both methoxy and nitro functionalised dyes and that greatest quenching ability, within the dyes studied, is achieved using di-methoxy substituted dyes. However the efficiency of the di-nitro substituted dye is very much less than that of the di-methoxy equivalent.

With Cy5 as the fluorophore it was determined that the presence of a naphthyl group reduces the quenching efficiency of the dye. The dyes with the azo link at the "6 position" (that is, meta to the NH group of the benzotriazole; see Formula A5-3) again proved to be less effective than the dyes with the azo link at the "7 position" (that is, ortho to the NH group of the benzotriazole; see Formula A5-4).

The same overall conclusion can be drawn for quenchers with Cy5 as for quenchers with fluorescein, di-methoxy substituted dyes with maleimide groups make the most efficient quenchers and using a quencher with the azo link at the "6 position" causes a large drop in efficiency. For the top performing dyes, the substitution of an amine group for a maleimide can increase the efficiency slightly.

A separate series of experiments are shown in Figure 4. This shows quenching of FAM by two dyes in this class using a 5'-FAM labelled oligonucleotide and a 3'-dye labelled complementary sequence. Two azo dyes were used and each show excellent quenching which is further improved by the addition of silver colloid. Spectra below are fluorescence emission using 492 excitation.

Figure 4 compares the ability of the dyes DMABTMI and PABTMI to quench FAM when attached to oligonucleotides. The FAM is on the 5'-end of one sequence and the dyes on the 3'-end of the complementary sequence. As

shown in the Figure, both dyes are effective quenchers although in this case the PABT was slightly superior. It was found that when silver nanoparticles were added, the quenching improved still further, and the addition of spermine improved it further still.

In summary therefore, the results showed that:

- Di-substituted aromatic rings were better than mono-substituted aromatic rings.
- Unexpectedly, electron donating groups were better than electron withdrawing groups.
- The position of the azo link in the benzotriazole ring system greatly affects the quenching. For example it can be increased from (for FAM) ~60% for "6 position" the original dyes to >95% (for "7 position")

It was also observed that the overlap between fluorophore and quencher absorption is not always a good indicator of quenching efficiency.

Another conclusion reached was on the influence of molar absorptivity on quenching. In general it was observed that the higher the molar absorptivity, the better the quenching. Although there was no direct correlation, when considered alongside the other factors it is clearly an important consideration.

Methods

*Target* sequences

| | |
|---|---|
| Exact Complement - | 5' TTT TTT AAT AAA CTT TCA GAC CAG ATT TTT T |
| Mismatch - | 5' TTT TTT AAT AAA CTT T**T**A GAC CAG ATT TTT T |
| Control - | 5' CGC TTA CAG GAT |
| *Beacon* - 5'BTDye - | CGC ACC TCT GGT CTG AAA GTT TAT TGG TGC G-FAM |

*SERRS Beacon Synthesis*

The SERRS Beacons were produced by synthesising the desired sequence on a FAM CPG solid support (Transgenomic, Glasgow, UK) using an Expedite 8909 DNA synthesiser with phosphoramidite chemistry and adding the butadiene monomer as the final 5'-residue. Cleavage and deprotection in concentrated ammonia at 50 °C for 16 hours gave the 5'-diene 3'-FAM modified sequence which was purified by reverse phase HPLC. The benzotriazole azo dye maleimide (3 eq, sodium phosphate buffer pH 5.5 with 30% MeCN) was added to the diene oligonucleotide and left for 16 hours at 40 °C in the dark. The SERRS Beacon was purified by reverse phase HPLC on a C18 Supelco column with buffer A = 0.1 M triethylammonium acetate pH 6.5, buffer B = 0.1 M triethylammonium acetate with 75 % acetonitrile running from 20 to 70 % B over 25 minutes at 1 $mlmin^{-1}$.

*Hybridisation Conditions*

To the SERRS Beacon (150 µl, $2 \times 10^{-6}$ M) in buffer (1 mM $MgCl_2$, 20 mM Tris.HCL, pH 8.0) was added the desired sequence as above (5 equivalents) and then left for 40 minutes at room temperature prior to analysis.

*Nanoparticle SERRS*

Citrate reduced silver nanoparticles were produced as previously reported.[9] For the analysis the SERRS Beacon mixture from above (20 µl) was added to silver nanoparticles (200 µl) with spermine tetrahydrochloride (10 µl, $1 \times 10^{-5}$ M) to give a final concentration of the SERRS Beacon of $1.2 \times 10^{-7}$ M. SERRS was accumulated on a Renishaw Ramascope 200 with 514.5 nm excitation using two scans of ten seconds.

The spermine acts as an excellent neutraliser of the phosphate backbone of the DNA[21] but also aggregates the nanoparticles to provide maximum surface enhancement. It was found that, generally speaking, SERRS Beacons require less spermine than other samples (Refs 11-13) since an excess could cause over-aggregation of the nanoparticles - for example a ratio of about two to one spermine: SERRS Beacon was found to be effective in examples described herein.

*Silver/PVA SERRS*

The silver/PVA films were prepared as previously reported.[10] The SERRS Beacon mixture from above (10 µl) was added to the film and left to sit for 20 minutes. The film was washed well with water and then examined using the

Renishaw Ramascope as before but using 25 % of the laser power.

*Other analysis, Spectroscopy & Chromatography*

$^1$H NMR spectra were recorded on a Bruker DPX 400 MHz spectrometer. Mass spectroscopy was performed as a university service on a JEOL AX505 spectrometer. UV-visible spectra were recorded on a Varian Carey 300 Bio spectrophotometer in a solvent mixture of water,

DMF, acetonitrile (70: 15: 15). Fluorescence emission spectra were recorded on a Varian Cary Eclipse fluorescence spectrophotometer.

Thin layer chromatography (TLC) was carried out on aluminium sheets, silica gel 60 $F_{254}$ 0.2 mm layer (Merck) using a dichloromethane: methanol 9:1 v/v solvent system. 5-Aminobenzotriazole was visualised using iodine vapours giving a brown colour.

*Syntheses*

PABT was prepared as described in the Analyst (2003) 128, 6, 692-699.

7-(3',5'-Dimethoxyazophenyl)-6-aminobenzotriazole (3,5-DMABT) was prepared as follows:

3,5-Dimethoxyaniline was dissolved in 50% v/v HCl (1-15 volume) and diazotised by dropwise addition of sodium nitrite (1.2 equiv. in <1 volume $H_2O$) at 0 °C. An excess of sodium nitrite was detected using starch iodide paper. A dark blue colour indicated excess nitrous acid which inferred the formation of the diazonium salt. 5-Aminobenzotriazole (1 equiv.) was dissolved in sodium acetate buffer (1.0 M, pH 6, 6-60 volumes) and minimum amount of methanol. Diazotised amine (1.1 equiv.) was added dropwise and stirred at room temperature for 1 h. The precipitate formed was isolated by filtration and washed with water. The dye was obtained in 62% yield, $R_F$ (B) 0.45, $\delta_H$ (acetone-$d_6$) 3.84 (6H, s, 2$\times$$CH_3$), 6.57 (1H, m, Ar-H), 6.80 (2H, br s, $NH_2$), 7.03 (1H, d, J8.9, H-4), 7.41 (2H, s, Ar-H), 7.84 (1H, d, J9.0, H-5), 14.53 (1H, br s, NH), $\lambda_{max}$ (MeOH) 443 nm, CI MS m/z 298.11872 [$C_{14}H_{15}N_6O_2$ $(M+H)^+$ <0.1 ppm]

*References*

1. Tyagi, S. & Kramer, F. R. Molecular beacons: Probes that fluoresce upon hybridization. Nat. Biotechnol. 14, 303-308 (1996).
2. Holland, P. M., Abramson, R. D., Watson, R. & Gelfand, D. H. Detection of Specific Polymerase Chain-Reaction Product By Utilizing the 5'-]3' Exonuclease Activity of Thermus-Aquaticus Dna-Polymerase. Proc. Natl. Acad. Sci. USA 88, 7276-7280 (1991).
3. Whitcombe, D., Theaker, J., Guy, S. P., Brown, T. & Little, S. Detection of PCR products using self-probing amplicons and fluorescence. Nat. Biotechnol. 17, 804-807 (1999).
4. Wittwer, C. T., Herrmann, M. G., Moss, A. A. & Rasmussen, R. P. Continuous fluorescence monitoring of rapid cycle DNA amplification. Biotechniques 22, 130-& (1997).
5. Dubertret, B., Calame, M. & Libchaber, A. J. Single-mismatch detection using gold-quenched fluorescent oligonucleotides. Nat. Biotechnol. 19, 365-370 (2001).
6. Hildebrandt, P. & Stockburger, M. Surface-Enhanced Resonance Raman-Spectroscopy of Rhodamine-6g Adsorbed On Colloidal Silver. J. Phys. Chem. 88, 5935-5944 (1984).
7. Rodger, C., Smith, W. E., Dent, G. & Edmondson, M. Surface-enhanced resonance-Raman scattering: An informative probe of surfaces. J. Chem. Soc., Dalton Trans., 791-799 (1996).
8. Lee, P. C. & Meisel, D. Adsorption and Surface-Enhanced Raman of Dyes On Silver and Gold Sols. J. Phys. Chem. 86, 3391-3395 (1982).
9. Munro, C. H., Smith, W. E., Garner, M., Clarkson, J. & White, P. C. Characterization of the Surface of a Citrate-Reduced Colloid Optimized For Use As a Substrate For Surface-Enhanced Resonance Raman-Scattering. Langmuir 11, 3712-3720 (1995).
10. Volkan, M., Stokes, D. L. & Tuan, V. D. Surface-enhanced Raman of dopamine and neurotransmitters using sol-gel substrates and polymer-coated fiber-optic probes. Appl. Spectrosc. 54, 1842-1848 (2000).
11. Graham, D. et al. Selective detection of deoxyribonucleic acid at ultralow concentrations by SERRS. Anal. Chem. 69, 4703-4707 (1997).
12. Graham, D., Mallinder, B. J. & Smith, W. E. Surface-enhanced resonance Raman scattering as a novel method of DNA discrimination. Angew. Chem., Int. Ed. Engl. 39, 1061-1064 (2000).
13. Graham, D., Mallinder, B. J. & Smith, W. E. Detection and identification of labeled DNA by surface enhanced resonance Raman scattering. Biopolymers 57, 85-91 (2000).

14. Graham, D., Mallinder, B. J., Whitcombe, D. & Smith, W. E. Surface enhanced resonance Raman scattering (SERRS) - A first example of its use in multiplex genotyping. Chemphyschem 2, 746-+ (2001).
15. Graham, D., Mallinder, B. J., Whitcombe, D., Watson, N. D. & Smith, W. E. Simple multiplex genotyping by surface-enhanced resonance Raman scattering. Anal. Chem. 74, 1069-+ (2002).
16. Graham, D. et al. Synthesis of novel monoazo benzotriazole dyes specifically for surface enhanced resonance Raman scattering. Chem. Commun., 1187-1188 (1998).
17. McAnally, G. et al. SERRS dyes. - Part I. Synthesis of benzotriazole monoazo dyes as model analytes for surface enhanced resonance Raman scattering. Analyst 127, 838-841 (2002).
18. Graham, D., Brown, R. & Smith, W. E. SERRS detection of PNA and DNA labelled with a specifically designed benzotriazole azo dye. Chem. Commun., 1002-1003 (2001).
19. Fruk, L., Grondin, A., Smith, W. E. & Graham, D. A new approach to oligonucleotide labelling using Diels-Alder cycloadditions and detection by SERRS. Chem. Commun., 2100-2101 (2002).
20. Brown, R., Smith, W. E. & Graham, D. Synthesis of a benzotriazole azo dye phosphoramidite for labelling of oligonucleotides. Tetrahedron Lett. 44, 1339-1342 (2003).
21. Basu, H. S. & Marton, L. J. The Interaction of Spermine and Pentamines With Dna. Biochem. J. 244, 243-246 (1987).
22. Grondin, A., Robson, D. C., Smith, W. E. & Graham, D. Benzotriazole maleimide as a bifunctional reactant for SERS. J. Chem. Soc., Perkin Trans. 2, 2136-2141 (2001).

## Claims

**1.** A method for determining the presence or absence of a target nucleotide sequence in a sample nucleic acid, the method comprising:

(a) providing a detection agent, which agent comprises:

(i) a probe comprising a target complement sequence (TCS) being complementary to the target sequence and first and second oligonucleotide arms flanking the TCS.
said first and second oligonucleotide arms forming a stem duplex,
and said first arm having incorporated a first label moiety being detectable by surface enhanced Raman spectroscopy (SERS)
and said second arm terminating in a second label moiety being detectable by SERS,
which second arm further includes a surface seeking group (SSG) capable of promoting association of the second label onto a metal surface
(ii) a metal surface associated with said probe via said SSG, such that said first and second label moieties are in close proximity to each other and to the metal surface

(b) exposing the sample to the detection agent,
(c) detecting hybridisation of the TCS to any target sequence present in the sample by a change in the SERS spectra of said agent.

**2.** A method as claimed in claim 1 wherein the first label moiety is detectable by both fluorescence and SERS and the detection of hybridisation in step (c) further includes detecting a change in the fluorescence of the agent.

**3.** A method as claimed in claim 1 or claim 2 wherein the label moieties are conjugated to the termini of the arms.

**4.** A method as claimed in any one of the preceding claims wherein the sample nucleic acid is selected from DNA and RNA.

**5.** A method as claimed in any one of the preceding claims wherein the length of the TCS is from 10 to 140 nucleotides.

**6.** A method as claimed in any one of the preceding claims wherein the length of the stem duplex is from 3 to 25 nucleotides.

**7.** A method as claimed in claim 6 wherein the first arm comprises a sequence of between 6 and 12 nucleotides immediately adjacent to its terminus that are complementary to nucleotides of the second arm sequence immediately adjacent to its terminus and the stem duplex is formed by said complementary sequences.

**8.** A method as claimed in any one of the preceding claims wherein the detection of hybridisation in step (c) comprises taking a SERS spectrum across a range of wavelengths and analysing the SERS spectrum with a data processor to detect the contribution of each of the label moieties.

**9.** A method as claimed in any one of the preceding claims wherein more than one first label moiety is incorporated into the first arm.

**10.** A method as claimed in any one of the preceding claims wherein the first label moiety comprises a fluorescein dye.

**11.** A method as claimed in claim 10 wherein the first label moiety comprises FAM.

**12.** A method as claimed in any one of the preceding claims wherein the second label moiety comprises an azo dye.

**13.** A method as claimed in any one of the preceding claims wherein the second label moiety comprises the SSG.

**14.** A method as claimed in claim 12 and claim 13 wherein the second label moiety comprises an azo-benzotriazole.

**15.** A method as claimed in claim 14 wherein the azo-benzotriazole is selected from compounds of the formula A5:

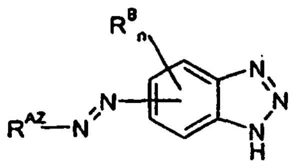

(A5)

wherein:

$R^{AZ}$ is independently an azo substituent;
n is independently 0, 1, 2, or 3; and,
each $R^B$ is independently a benzo substituent.

**16.** A method as claimed in claim 15 wherein the compound is selected from compounds of the following formulae A5-1, A5-2, A5-3, or A5-4:

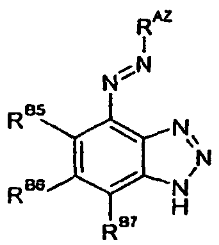

(A5-1)

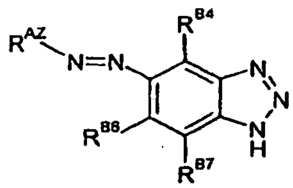

(A5-2)

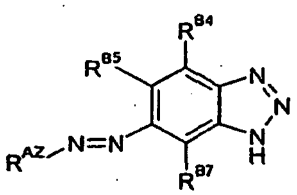

(A5-3)

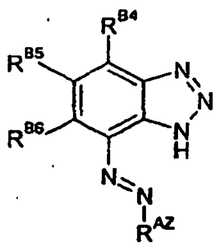

(A5-4)

wherein:

$R^{AZ}$ is independently an azo substituent; and,

each of $R^{B4}$, $R^{B5}$, $R^{B6}$, and $R^{B7}$ is independently -H or a benzo substituent.

**17.** A method as claimed in claim 16 wherein the one of the benzo substituents, $R^B$, is, or comprises, a probe or a linker linked to a probe.

**18.** A method as claimed in claim 17 wherein the linker is an alkyl spacer.

**19.** A method as claimed in any one of claims 15 to 18 wherein the azo substituent, $R^{AZ}$, is independently $C_{6-20}$carboaryl or $C_{5-20}$heteroaryl, and is optionally substituted.

**20.** A method as claimed in claim 19 wherein $R^{AZ}$, is a group of the formula A6:

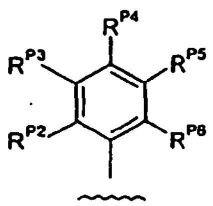

(A6)

wherein:

each of $R^{P2}$, $R^{P3}$, $R^{P4}$, $R^{P5}$, and $R^{P6}$ is independently -H or a phenyl substituent;
and optionally, two adjacent groups selected from $R^{P2}$, $R^{P3}$, $R^{P4}$, $R^{P5}$, and $R^{P6}$ together with the carbon atoms to which they are attached, form a fused ring, having 5 or 6 ring atoms, optionally including one or more heteroatoms selected from O, S, and N.

**21.** A method as claimed in claim 20 wherein $R^{AZ}$, is a group of the formula A7:

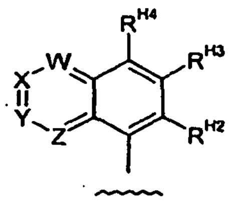

(A7)

wherein:

each of $R^{H2}$, $R^{H3}$, and $R^{H4}$ is independently -H or as defined below for the substituents on the phenyl/naphthyl azo substituent, $R^P$ and $R^N$; and, each of W, Y, Y, and Z is independently -CH=, -CR=, -N=, -O-, or -S-.

**22.** A method as claimed in claim 21 wherein $R^{AZ}$ is a group of one of the following formulae A8-1, A8-2, or A8-3:

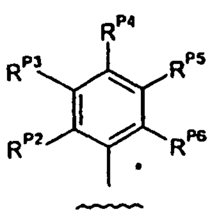

(A8-1)

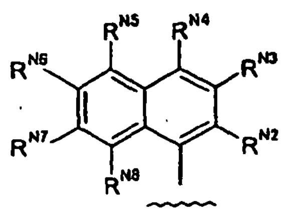

(A8-2)

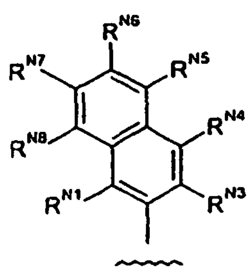

(A8-3)

wherein:

each of $R^{P2}$, $R^{P3}$, $R^{P4}$, $R^{P5}$, and $R^{P6}$ is independently -H or a phenyl substituent; and,
each of $R^{N1}$, $R^{N2}$, $R^{N3}$, $R^{N4}$, $R^{N5}$, $R^{N6}$, $R^{N7}$, and $R^{N8}$ is independently -H, or a naphthyl substituent.

**23.** A method as claimed in claim 22 wherein each of $R^{P2}$, $R^{P3}$, $R^{P4}$, $R^{P5}$, and $R^{P6}$, and each of $R^{N1}$, $R^{N2}$, $R^{N3}$, $R^{N4}$, $R^{N5}$, $R^{N6}$, $R^{N7}$, and $R^{N8}$ is independently -H or a group selected from: hydrogen; hydroxy; $C_{1}$-$_{4}$alkoxy; amino; $C_{1-4}$alkyl-amino; nitro; and cyano.

**24.** A method as claimed in claim 22 wherein one of the phenyl substituents, $R^P$, or one of the naphthyl substituents, $R^N$, is, or comprises, a probe or a linker linked to a probe.

**25.** A method as claimed in claim 24 wherein the linker is an alkyl spacer.

**26.** A method as claimed in any one of claims 23 to 25 wherein the second label moiety comprises a compound of the formula A11:

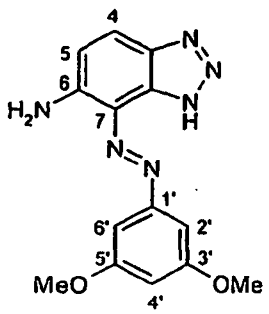

(A11)

**27.** A method as claimed in any one of the preceding claims wherein the metal surface is selected from citrate reduced silver nanoparticles or a PVA/silver film.

**28.** A process for producing a detection agent for use in the method as claimed in any one of claims 1 to 27, the process comprising:

(i) providing a probe comprising
a target complement sequence (TCS) being complementary to the target sequence to be detected;
flanking the TCS with first and second oligonucleotide arms,
said first and second oligonucleotide arms forming a stem duplex,
and said first arm having incorporated a first label moiety being detectable by surface enhanced Raman spectroscopy (SERS)
and said second arm terminating in a second label moiety being detectable by SERS,
which second arm further includes a surface seeking group (SSG) capable of promoting association of the second label onto a metal surface
(ii) associating said probe with a metal surface via the SSG of the probe, such that said first and second label moieties are in close proximity to each other and to the metal surface

**29.** A process for producing a probe for use in the detection agent of any one of claims 1 to 28, the process comprising:

(i) synthesising a nucleic acid comprising
a target complement sequence (TCS) being complementary to the target sequence to be detected;
flanking the TCS with first and second oligonucleotide arms,
said first and second oligonucleotide arms being capable of forming a stem duplex,
wherein said nucleic acid is synthesised in a 3' to 5' direction,
and wherein the 3' terminus of the nucleic acid is tethered to a solid support via a first label moiety being detectable by surface enhanced Raman spectroscopy (SERS),

(ii) following synthesis of said nucleic acid, conjugating to the 5' terminus of the nucleic acid, a second label moiety being detectable by SERS, and including a surface seeking group (SSG) capable of promoting association of the second label onto a metal surface.

**30.** A process as claimed in claim 29 as dependent on claim 15 or claim 16 wherein one of the n $R^B$ groups is an amino group ($-NH_2$) or a maleimido group.

**31.** A process as claimed in claim 30 wherein $R^{B6}$ is an amino group ($-NH_2$) or a maleimido group.

**32.** A process as claimed in claim 30 or claim 31 wherein the remaining $R^B$ groups are -H.

**33.** A process as claimed in any one of claims 29 to 32 wherein the conjugation to the 5' terminus employs phosphoramidite addition and\or Diels Alder cycloaddition.

**34.** A process for producing a probe for use in the detection agent of any one of claims 1 to 28, the process comprising:

(i) synthesising a nucleic acid comprising
a target complement sequence (TCS) being complementary to the target sequence to be detected;
flanking the TCS with first and second oligonucleotide arms,
said first and second oligonucleotide arms being capable of forming a stem duplex,
wherein said nucleic acid is synthesised in a 3' to 5' direction,
and wherein the 3' terminus of the nucleic acid is tethered to a solid support via a second label moiety being detectable by surface enhanced Raman spectroscopy (SERS), and including a surface seeking group (SSG) capable of promoting association of the second label onto a metal surface,
(ii) following synthesis of said nucleic acid, conjugating to the 5' terminus of the nucleic acid, a first label moiety being detectable by SERS.

**35.** A detection agent for use in the method of any one of claims 1 to 27 comprising:

(i) a probe comprising
a target complement sequence (TCS) being complementary to the target sequence;
first and second oligonucleotide arms flanking the TCS said first and second oligonucleotide arms forming a stem duplex,
and said first arm having incorporated a first label moiety being detectable by fluorescence and surface enhanced Raman spectroscopy (SERS)
and said second arm terminating in a second label moiety being detectable by SERS,
which second arm further includes a surface seeking group (SSG) capable of promoting association of the second label onto a metal surface.
(ii) a metal surface associated with said probe via said SSG, such that said first and second label moieties are in close proximity to each other and to the metal surface.

**36.** A composition comprising two or more detection agents as claimed in claim 35, each having distinctive TCSs and distinctive first and\or second label moieties.

**37.** A method as claimed in any one of claims 1 to 27 for determining the presence or absence of two or more target nucleic acid sequences in a sample nucleic acid, the method comprising
providing a plurality of detection agents as claimed in claim 35 wherein each agent comprises a target complement sequence (TCS) complementary to one of said target sequences,
and wherein each agent has distinguishable detection characteristics,
and wherein detection of hybridisation of each TCS to its corresponding target sequence present in the sample is detected by a change in the SERS spectra of each agent which change is distinctive to each agent.

**38.** A method or process as claimed in any one of claims 1 to 28 wherein the target sequence comprises a genetic marker.

**39.** A method as claimed in any one of claims 1 to 27 wherein:

(i) the method is for detection of the presence of an optionally pathogenic organism in a sample wherein the presence of the target sequence is associated with the presence of the organism; or

(ii) the method is for diagnosis or prognosis of a disease in an individual from whom the sample nucleic acid is taken wherein the disease is associated with a DNA variation and the target sequence corresponds to the sequence in which the variation occurs; or
(iii) the method is for selecting a non-human organism having a particular phenotypic trait wherein the trait is associated with the target sequence; or
(iv) the method is for isolating a nucleic acid encoding a specific gene wherein the target sequence corresponds to a sequence associated with, or within, that gene; or
(v) the method is for phylogenetic classification of a non-human organism from whom the sample nucleic acid is taken, wherein the target sequence is associated with a population, species or genus; or
(vi) the method is for identification of an individual from whom the sample nucleic acid is taken, wherein the target sequence is associated with that individual; or
(vii) the method is for expression profiling a cell or tissue from which sample mRNA is taken, wherein the target sequence is associated with that cell or tissue.

**40.** A method or process as claimed in any one of claims 1 to 28 wherein the target sequence comprises the sequence of a short interfering RNA capable of silencing a gene.

**41.** A method, process, agent, probe, or composition as claimed in any one of the preceding claims wherein the SERS is SERRS.

**Patentansprüche**

**1.** Verfahren zur Bestimmung des Vorhandenseins oder Fehlens einer Zielnucleotidsequenz in einer Testnucleinsäure, wobei das Verfahren Folgendes umfasst:

(a) die Bereitstellung eines Detektionsmittels, wobei das Mittel Folgendes umfasst:

(i) eine Sonde, die eine Zielkomplementärsequenz (TCS), die in Bezug auf die Zielsequenz komplementär ist, und einen ersten und einen zweiten Oligonucleotidarm umfasst, die die TCS flankieren,
wobei der erste und der zweite Oligonucleotidarm einen Stammduplex bilden und wobei der erste Arm, in den eine erste Markierungsgruppierung integriert ist, mittels oberflächenverstärkter Raman-Spektroskopie (SERS) detektiert werden kann
und wobei der zweite Arm, der in einer zweiten Markierungsgruppierung endet, mittels SERS detektiert werden kann,
wobei der zweite Arm weiters eine oberflächensuchende Gruppe (SSG) umfasst, die in der Lage ist, die Bindung der zweiten Markierung an eine Metalloberfläche zu fördern,
(ii) eine Metalloberfläche, die über die SSG mit der Sonde verbunden ist, sodass die erste und die zweite Markierungsgruppierung einander und der Metalloberfläche sehr nahe sind,

(b) das Aussetzen der Probe gegenüber dem Detektionsmittel,
(c) das Detektieren der Hybridisierung der TCS an eine beliebige Zielsequenz, die in der Probe vorhanden ist, anhand einer Veränderung der SERS-Spektren des Mittels.

**2.** Verfahren nach Anspruch 1, worin die erste Markierungsgruppierung mittels Fluoreszenz und SERS detektiert werden kann und die Detektion der Hybridisierung in Schritt (c) weiters das Detektieren einer Veränderung der Fluoreszenz des Mittels umfasst.

**3.** Verfahren nach Anspruch 1 oder 2, worin die Markierungsgruppierungen an die Enden der Arme konjugiert sind.

**4.** Verfahren nach einem der vorangegangenen Ansprüche, worin die Probenucleinsäure aus DNA und RNA ausgewählt ist.

**5.** Verfahren nach einem der vorangegangenen Ansprüche, worin die Länge der TCS 10 bis 140 Nucleotide beträgt.

**6.** Verfahren nach einem der vorangegangenen Ansprüche, worin die Länge des Stammduplex 3 bis 25 Nucleotide beträgt.

**7.** Verfahren nach Anspruch 6, worin der erste Arm eine Sequenz mit zwischen 6 und 12 Nucleotiden unmittelbar an sein Ende angrenzend umfasst, die in Bezug auf Nucleotide der Sequenz des zweiten Arms, die unmittelbar an dessen Ende angrenzt, komplementär sind, und der Stammduplex durch die komplementären Komplexe gebildet wird.

**8.** Verfahren nach einem der vorangegangenen Ansprüche, worin die Detektion der Hybridisierung in Schritt (c) das Erstellen eines SERS-Spektrums in einem Wellenlängenbereich und das Analysieren des SERS-Spektrums mit einem Datenprozessor umfasst, um den Beitrag jeder der Markierungsgruppierungen zu detektieren.

**9.** Verfahren nach einem der vorangegangenen Ansprüche, worin mehr als eine erste Markierungsgruppierung in den ersten Arm inkorporiert ist.

**10.** Verfahren nach einem der vorangegangenen Ansprüche, worin die erste Markierungsgruppierung einen Fluoresceinfarbstoff umfasst.

**11.** Verfahren nach Anspruch 10, worin die erste Gruppierung FAM umfasst.

**12.** Verfahren nach einem der vorangegangenen Ansprüche, worin die zweite Markierungsgruppierung einen Azofarbstoff umfasst.

**13.** Verfahren nach einem der vorangegangenen Ansprüche, worin die zweite Markierungsgruppierung die SSG umfasst.

**14.** Verfahren nach Anspruch 12 und 13, worin die zweite Markierungsgruppierung ein Azobenzotriazol umfasst.

**15.** Verfahren nach Anspruch 14, worin das Azobenzotriazol aus Verbindungen der Formel A5 ausgewählt ist:

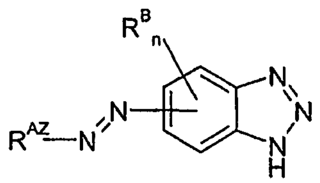

(A5)

worin:

$R^{AZ}$ unabhängig ein Azo-Substituent ist;
n unabhängig 0, 1, 2 oder 3 ist und
die $R^B$ jeweils unabhängig voneinander ein Benzo-Substituent sind.

**16.** Verfahren nach Anspruch 15, worin die Verbindung aus Verbindungen der folgenden Formeln A5-1, A5-2, A5-3 oder A5-4 ausgewählt ist:

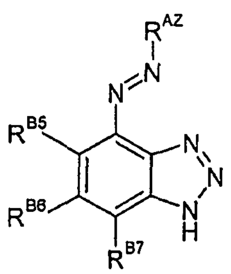

(A5-1)

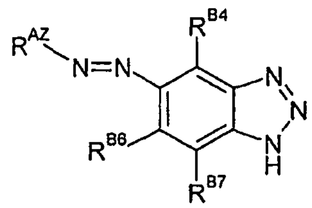

(A5-2)

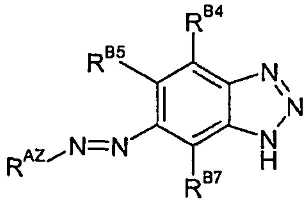

(A5-3)

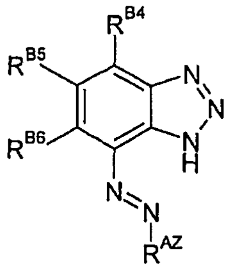

(A5-4)

worin:

$R^{AZ}$ unabhängig ein Azo-Substituent ist und
$R^{B4}$, $R^{B5}$, $R^{B6}$ und $R^{B7}$ jeweils unabhängig voneinander -H oder ein Benzo-Substituent sind.

**17.** Verfahren nach Anspruch 16, worin der eine der Benzo-Substituenten, $R^B$, eine Sonde oder ein mit der Sonde verbundener Linker ist oder eine(n) solche(n) umfasst.

**18.** Verfahren nach Anspruch 17, worin der Linker ein Alkyl-Spacer ist.

**19.** Verfahren nach einem der Ansprüche 15 bis 18, worin der Azo-Substituent $R^{AZ}$ unabhängig $C_{6-20}$-Carboaryl oder $C_{5-20}$-Heteroaryl ist und gegebenenfalls substituiert ist.

**20.** Verfahren nach Anspruch 19, worin $R^{AZ}$ eine Gruppe der Formel A6 ist:

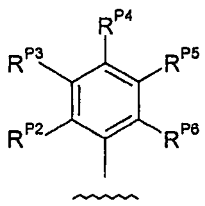

(A6)

worin:

$R^{P2}$, $R^{P3}$, $R^{P4}$, $R^{P5}$ und $R^{P6}$ jeweils unabhängig voneinander -H oder ein Phenylsubstituent sind;
und gegebenenfalls zwei benachbarte Gruppen, die aus $R^{P2}$, $R^{P3}$, $R^{P4}$, $R^{P5}$ und $R^{P6}$ ausgewählt sind, gemeinsam mit den Kohlenstoffatomen, an die sie gebunden sind, einen kondensierten Ring mit 5 oder 6 Ringatomen bilden, der gegebenenfalls ein oder mehrere aus O, S und N ausgewählte Heteroatome umfasst.

**21.** Verfahren nach Anspruch 20, worin $R^{AZ}$ eine Gruppe der Formel A7 ist:

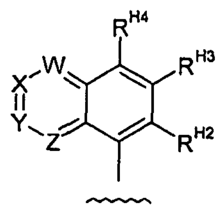

(A7)

worin:

$R^{H2}$, $R^{H3}$ und $R^{H4}$ jeweils unabhängig voneinander -H oder wie unten für Substituenten an dem Phenyl-/Naphthyl-Azo-Substituenten, $R^P$ und $R^N$, definiert sind und W, X, Y und Z jeweils unabhängig voneinander -CH=, -CR=, -N=, -O- oder -S- sind.

**22.** Verfahren nach Anspruch 21, worin $R^{AZ}$ eine Gruppe einer der folgenden Formeln A8-1, A8-2 oder A8-3 ist:

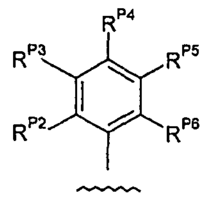

(A8-1)

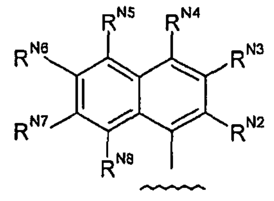

(A8-2)

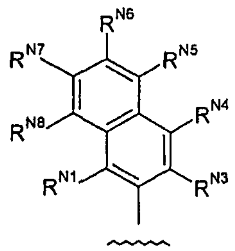

(A8-3)

worin:

$R^{P2}$, $R^{P3}$, $R^{P4}$, $R^{P5}$ und $R^{P6}$ jeweils unabhängig voneinander -H oder ein Phenylsubstituent sind und $R^{N1}$, $R^{N2}$, $R^{N3}$, $R^{N4}$, $R^{N5}$, $R^{N6}$, $R^{N7}$ und $R^{N8}$ unabhängig voneinander -H oder ein Naphthylsubstituent sind.

**23.** Verfahren nach Anspruch 22, worin $R^{P2}$, $R^{P3}$, $R^{P4}$, $R^{P5}$ und $R^{P6}$ und $R^{N1}$, $R^{N2}$, $R^{N3}$, $R^{N4}$, $R^{N5}$, $R^{N6}$, $R^{N7}$ und $R^{N8}$ jeweils unabhängig voneinander -H oder eine aus Wasserstoff, Hydroxy, $C_{1-4}$-Alkoxy, Amino, $C_{1-4}$-Alkylamino, Nitro und Cyano ausgewählte Gruppe sind.

**24.** Verfahren nach Anspruch 22, worin einer der Phenylsubstituenten $R^P$ oder einer der Naphthylsubstituenten $R^N$ eine Sonde oder ein an eine Sonde gebundener Linker ist oder eine(n) solche(n) umfasst.

**25.** Verfahren nach Anspruch 24, worin der Linker ein Alkyl-Spacer ist.

**26.** Verfahren nach einem der Ansprüche 23 bis 25, worin die zweite Markierungsgruppierung eine Verbindung der Formel A11 umfasst:

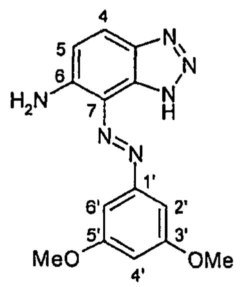

(A11).

**27.** Verfahren nach einem der vorangegangenen Ansprüche, worin die Metalloberfläche aus durch Citrat reduzierten Silbernanoteilchen oder einem PVA/Silberfilm ausgewählt ist.

**28.** Prozess zur Herstellung eines Detektionsmittels zur Verwendung in einem Verfahren nach einem der Ansprüche 1 bis 27, wobei der Prozess Folgendes umfasst:

(i) das Bereitstellen einer Sonde, die Folgendes umfasst:

eine Zielkomplementärsequenz (TCS), die in Bezug auf die zu detektierende Zielsequenz komplementär ist, wobei die TCS durch einen ersten und einen zweiten Oligonucleotidarm flankiert wird,
wobei der erste und der zweite Oligonucleotidarm einen Stammduplex bilden
und wobei der erste Arm, in den eine erste Markierungsgruppierung integriert ist, mittels oberflächenverstärkter Raman-Spektroskopie (SERS) detektiert werden kann

und wobei der zweite Arm, der in einer zweiten Markierungsgruppierung endet, mittels SERS detektiert werden kann,

wobei der zweite Arm weiters eine oberflächensuchende Gruppe (SSG) umfasst, die in der Lage ist, die Bindung der zweiten Markierung an eine Metalloberfläche zu fördern,

(ii) das Verbinden der Sonde mit einer Metalloberfläche über die SSG der Sonde, sodass die erste und die zweite Markierungsgruppierung einander und der Metalloberfläche sehr nahe sind.

**29.** Prozess zur Herstellung einer Sonde zur Verwendung in einem Detektionsmittel nach einem der Ansprüche 1 bis 28, wobei der Prozess Folgendes umfasst:

(i) das Synthetisieren einer Nucleinsäure, die Folgendes umfasst:

eine Zielkomplementärsequenz (TCS), die in Bezug auf die zu detektierende Zielsequenz komplementär ist, wobei die TCS durch einen ersten und einen zweiten Oligonucleotidarm flankiert wird,

wobei der erste und der zweite Oligonucleotidarm einen Stammduplex bilden können,

worin die Nucleinsäure in einer Richtung von 3' nach 5' synthetisiert wird

und worin das 3'-Ende der Nucleinsäure über eine erste Markierungsgruppierung, die mittels oberflächenverstärkter Raman-Spektroskopie (SERS) detektiert werden kann, an einen festen Träger gebunden ist,

(ii) nach der Synthese der Nucleinsäure: das Konjugieren einer zweiten Markierungsgruppierung, die mittels SERS detektiert werden kann, an das 5'-Ende der Nucleinsäure und das Integrieren einer oberflächensuchenden Gruppe (SSG), die in der Lage ist, die Bindung der zweiten Markierung an eine Metalloberfläche zu fördern.

**30.** Prozess nach Anspruch 29 in Abhängigkeit von Anspruch 15 oder 16, worin eine der n $R^B$-Gruppen eine Aminogruppe ($-NH_2$) oder eine Maleinimidogruppe ist.

**31.** Prozess nach Anspruch 30, worin $R^{B6}$ eine Aminogruppe ($-NH_2$) oder eine Maleinimidogruppe ist.

**32.** Prozess nach Anspruch 30 oder 31, worin die restlichen $R^B$-Gruppen -H sind.

**33.** Prozess nach einem der Ansprüche 29 bis 32, worin die Bindung an das 5'-Ende mittels Phosphoramiditaddition und/oder Diels-Alder-Cycloaddition erfolgt.

**34.** Prozess zur Herstellung einer Sonde zur Verwendung in einem Detektionsmittel nach einem der Ansprüche 1 bis 28, wobei der Prozess Folgendes umfasst:

(i) das Synthetisieren einer Nucleinsäure, die eine Zielkomplementärsequenz (TCS) umfasst, die in Bezug auf die zu detektierende Zielsequenz komplementär ist, wobei die TCS durch einen ersten und einen zweiten Oligonucleotidarm flankiert wird,

wobei der erste und der zweite Oligonucleotidarm einen Stammduplex bilden können,

worin die Nucleinsäure in einer Richtung von 3' nach 5' synthetisiert wird

und worin das 3'-Ende der Nucleinsäure über eine zweite Markierungsgruppierung, die mittels oberflächenverstärkter Raman-Spektroskopie (SERS) detektiert werden kann und eine oberflächensuchende Gruppe (SSG) umfasst, die in der Lage ist, die Bindung der zweiten Markierung an eine Metalloberfläche zu fördern, an einen festen Träger gebunden ist,

(ii) nach der Synthese der Nucleinsäure: das Konjugieren einer ersten Markierungsgruppierung, die mittels SERS detektiert werden kann, an das 5'-Ende der Nucleinsäure.

**35.** Detektionsmittel zur Verwendung in einem Verfahren nach einem der Ansprüche 1 bis 27, das Folgendes umfasst:

(i) eine Sonde, die Folgendes umfasst:

eine Zielkomplementärsequenz (TCS), die in Bezug auf die Zielsequenz komplementär ist;

einen ersten und einen zweiten Oligonucleotidarm, die die TCS flankieren, wobei der erste und der zweite Oligonucleotidarm einen Stammduplex bilden,

und wobei eine erste Markierungsgruppierung, die mittels Fluoreszenz und oberflächenverstärkter Raman-Spektroskopie (SERS) detektiert werden kann, in den ersten Arm integriert ist
und wobei der zweite Arm in einer zweiten Markierungsgruppierung endet, die mittels SERS detektiert werden kann,
wobei der zweite Arm weiters eine oberflächensuchende Gruppe (SSG) umfasst, die in der Lage ist, die Bindung der zweiten Markierung an eine Metalloberfläche zu fördern,

(ii) eine Metalloberfläche, die über die SSG mit der Sonde verbunden ist, sodass die erste und die zweite Markierungsgruppierung einander und der Metalloberfläche sehr nahe sind.

**36.** Zusammensetzung, die zwei oder mehrere Detektionsmittel nach Anspruch 35 umfasst, wobei jedes eine eigene TCS und eine eigene erste und/oder zweite Markierungsgruppierung aufweist.

**37.** Verfahren nach einem der Ansprüche 1 bis 27 zur Bestimmung des Vorliegens oder Fehlens von zwei oder mehreren Zielnucleinsäuresequenzen in einer Probenucleinsäure, wobei das Verfahren Folgendes umfasst:

die Bereitstellung einer Vielzahl von Detektionsmitteln nach Anspruch 35, worin jedes Mittel eine Zielkomplementärsequenz (TCS) umfasst, die in Bezug auf die Zielsequenz komplementär ist,
und worin jedes Mittel unterschiedliche Detektionseigenschaften aufweist
und worin die Detektion der Hybridisierung jeder TCS an die entsprechende Zielsequenz, die in der Probe vorhanden ist, anhand einer Veränderung der SERS-Spektren jedes Mittels detektiert wird, wobei die Veränderung für das jeweilige Mittel typisch ist.

**38.** Verfahren oder Prozess nach einem der Ansprüche 1 bis 28, worin die Zielsequenz einen genetischen Marker umfasst.

**39.** Verfahren nach einem der Ansprüche 1 bis 27, worin:

(i) das Verfahren zur Detektion des Vorhandenseins eines gegebenenfalls pathogenen Organismus in einer Probe dient, worin das Vorhandensein der Zielsequenz mit dem Vorhandensein des Organismus zusammenhängt; oder
(ii) das Verfahren zur Diagnose oder Prognose einer Erkrankung in einem Individuum dient, aus dem die Probenucleinsäure entnommen wird, worin die Erkrankung mit einer DNA-Variation zusammenhängt und die Zielsequenz der Sequenz entspricht, in der die Variation auftritt; oder
(iii) das Verfahren zur Selektion eines nicht-menschlichen Organismus dient, der eine bestimmte phänotypische Eigenschaft aufweist, wobei die Eigenschaft mit der Zielsequenz zusammenhängt; oder
(iv) das Verfahren zur Isolation einer Nucleinsäure dient, die für ein spezifisches Gen kodiert, worin die Zielsequenz einer Sequenz entspricht, die mit diesem Gen zusammenhängt oder in diesem vorliegt; oder
(v) das Verfahren zur phylogenetischen Klassifikation eines nicht-menschlichen Organismus dient, aus dem die Probenucleinsäure entnommen wurde, worin die Zielsequenz mit einer Population, einer Spezies oder einer Gattung assoziiert ist; oder
(vi) das Verfahren zur Identifizierung eines Individuums dient, aus dem die Probenucleinsäure entnommen wurde, worin die Zielsequenz mit diesem Individuum assoziiert ist; oder
(vii) das Verfahren zur Erstellung eines Expressionsprofils einer Zelle oder eines Gewebes dient, aus der/dem Probe-mRNA entnommen wird, worin die Zielsequenz mit der Zelle oder dem Gewebe assoziiert ist.

**40.** Verfahren oder Prozess nach einem der Ansprüche 1 bis 28, worin die Zielsequenz die Sequenz einer kurzen Stör-RNA umfasst, die in der Lage ist, ein Gen verstummen zu lassen.

**41.** Verfahren, Prozess, Mittel, Sonde oder Zusammensetzung nach einem der vorangegangenen Ansprüche, worin die SERS eine SERRS ist.

## Revendications

**1.** Méthode de détermination de la présence ou de l'absence d'une séquence de nucléotides cible dans un acide nucléique d'échantillon, la méthode comprenant:

(a) réaliser un agent de détection, ledit agent comprend:

(i) une sonde comprenant une séquence cible du complément (TCS) complémentaire à la séquence cible et des premier et second bras d'oligonucléotide flanquant la TCS,
lesdits premier et second bras d'oligonucléotide formant un duplex de souche,
et ledit premier bras ayant incorporé un premier fragment marqueur détectable par spectroscopie Raman augmentée en surface (SERS),
et ledit second bras se terminant dans un second fragment marqueur détectable par SERS,
ledit second bras comporte en outre un groupe de recherche de surface (SSG) apte à promouvoir l'association du second marqueur sur une surface métallique,
(ii) une surface métallique associée à ladite sonde par ledit SSG, de telle sorte que lesdits premier et second fragments marqueurs sont à proximité étroite l'un de l'autre et à la surface métallique,

(b) exposer l'échantillon à l'agent de détection,
(c) détecter l'hybridation de la TCS à toute séquence cible présente dans l'échantillon par un changement dans les spectres de SERS dudit agent.

**2.** Méthode selon la revendication 1, dans laquelle le premier fragment marqueur peut être détecté à la fois par fluorescence et SERS, et la détection de l'hybridation à l'étape (c) comprend en outre la détection d'un changement dans la fluorescence de l'agent.

**3.** Méthode selon la revendication 1 ou la revendication 2, dans laquelle les fragments marqueurs sont conjugués aux terminus des bras.

**4.** Méthode selon l'une quelconque des revendications précédentes, dans laquelle l'acide nucléique d'échantillon est sélectionné parmi ADN et ARN.

**5.** Méthode selon l'une quelconque des revendications précédentes, dans laquelle la longueur de la TCS est de 10 à 140 nucléotides.

**6.** Méthode selon l'une quelconque des revendications précédentes, dans laquelle la longueur du duplex de souche est de 3 à 25 nucléotides.

**7.** Méthode selon la revendication 6, dans laquelle le premier bras comprend une séquence comprise entre 6 et 12 nucléotides directement adjacente à son terminus qui sont complémentaires aux nucléotides de la séquence du second bras directement adjacente à son terminus, et le duplex de souche est formé par lesdites séquences complémentaires.

**8.** Méthode selon l'une quelconque des revendications précédentes, dans laquelle la détection de l'hybridation à l'étape (c) comprend la prise d'un spectre de SERS sur une plage de longueurs d'ondes et l'analyse du spectre de SERS avec un processeur de données pour détecter la contribution de chacun des fragments marqueurs.

**9.** Méthode selon l'une quelconque précédentes, dans laquelle plus d'un premier fragment marqueur est incorporé dans le premier bras.

**10.** Méthode selon l'une quelconque des revendications précédentes, dans laquelle le premier fragment marqueur comprend un colorant de fluorescéine.

**11.** Méthode selon la revendication 10, dans laquelle le premier fragment marqueur comprend FAM.

**12.** Méthode selon l'une quelconque des revendications précédentes, dans laquelle le second fragment marqueur comprend un colorant azo.

**13.** Méthode selon l'une quelconque des revendications précédentes, dans laquelle le second fragment marqueur comprend le SSG.

**14.** Méthode selon la revendication 12 et la revendication 13, dans laquelle le second fragment marqueur comprend un azo-benzotriazole.

**15.** Méthode selon la revendication 14, dans laquelle l'azo-benzotriazole est sélectionné parmi les composés de la

formule A5:

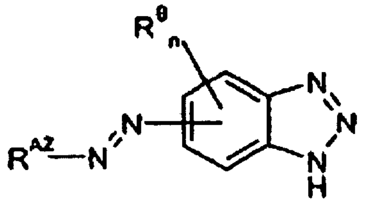

(A5)

où:

$R^{AZ}$ est indépendamment un substituant azo;
n est indépendamment 0, 1, 2 ou 3; et
chaque $R^B$ est indépendamment un substituant benzo.

**16.** Méthode selon la revendication 15, dans laquelle le composé est sélectionné parmi les composés des formules suivants A5-1, A5-2, A5-3 ou A5-4:

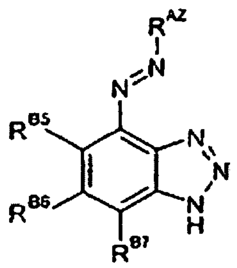

(A5-1)

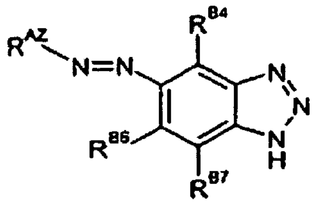

(A5-2)

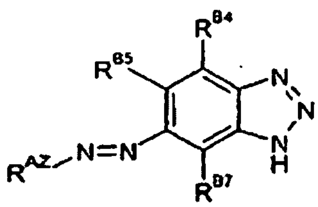

(A5-3)

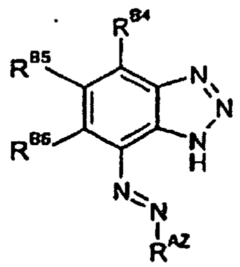

(A5-4)

où:

$R^{AZ}$ est indépendamment un substituant azo; et
chacun de $R^{B4}$, $R^{B5}$, $R^{B6}$ et $R^{B7}$ est indépendamment -H ou un substituant benzo.

**17.** Méthode selon la revendication 16, dans laquelle l'un des substituants benzo, $R^B$, est ou comprend une sonde ou un lieur lié à une sonde.

**18.** Méthode selon la revendication 17, dans laquelle le lieur est un espaceur d'alkyle.

**19.** Méthode selon l'une quelconque des revendications 15 à 18, dans laquelle le substituant azo, RAZ, est indépendamment carboaryle$C_{6-20}$ ou hétéroaryle$C_{5-20}$ et est optionnellement substitué.

**20.** Méthode selon la revendication 19, dans laquelle $R^{AZ}$ est un groupe de la formule A6:

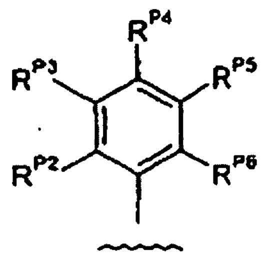

(A6)

où:

chacun de $R^{P2}$, $R^{P3}$, $R^{P4}$, $R^{P5}$ et $R^{P6}$ est indépendamment -H ou un substituant phényle;
et en option, deux groupes adjacents sélectionnés parmi $R^{P2}$, $R^{P3}$, $R^{P4}$, $R^{P5}$ et $R^{P6}$ ensemble avec les atomes de carbone auxquels ils sont attachés forment un cycle fusionné, ayant 5 ou 6 atomes de cycle, incluant en option un ou plusieurs hétéroatomes sélectionnés parmi O, S et N.

**21.** Méthode selon la revendication 20, dans laquelle $R^{AZ}$ est un groupe de la formule A7:

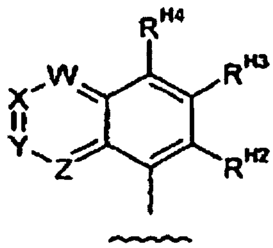

(A7)

où:

chacun de $R^{H2}$, $R^{H3}$ et $R^{H4}$ est indépendamment -H ou comme défini ci-dessous pour les substituants sur le substituant azo phényl/naphtyle, $R^P$ et $R^N$; et chacun de W, Y, Y et Z est indépendamment -CH=, -CR=, -N=, -O- ou -S-.

**22.** Méthode selon la revendication 21, dans laquelle $R^{AZ}$ est un groupe d'une des formules suivantes A8-1, A8-2 et A8-3:

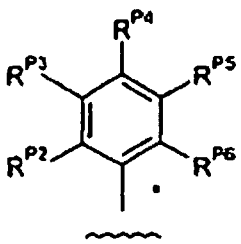

(A8-1)

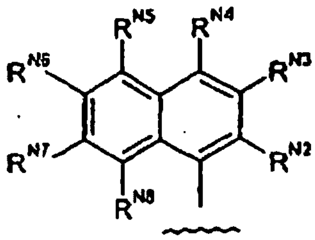

(A8-2)

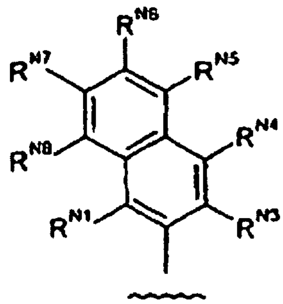

(A8-3)

où:

chacun de $R^{P2}$, $R^{P3}$, $R^{P4}$, $R^{P5}$ et $R^{P6}$ est indépendamment -H ou un substituant phényle; et
chacun de $R^{N1}$, $R^{N2}$, $R^{N3}$, $R^{N4}$, $R^{N5}$, $R^{N6}$, $R^{N7}$ et $R^{N8}$ est indépendamment -H ou un substituant naphtyle.

**23.** Méthode selon la revendication 22, dans laquelle chacun de $R^{P2}$, $R^{P3}$, $R^{P4}$, $R^{P5}$ et $R^{P6}$ et chacun de $R^{N1}$, $R^{N2}$, $R^{N3}$, $R^{N4}$, $R^{N5}$, $R^{N6}$, $R^{N7}$ et $N^{R8}$ est indépendamment -H ou un groupe sélectionné parmi: hydrogène; hydroxy, alcoxy$C_{1-4}$;

amino; alkyle$C_{1-4}$-amino; nitro et cyano.

**24.** Méthode selon la revendication 22, dans laquelle l'un des substituants phényle, $R^P$, ou un des substituants naphtyle, $R^N$, est ou comprend une sonde ou un lieur lié à une sonde.

**25.** Méthode selon la revendication 24, dans laquelle le lieur est un espaceur d'alkyle.

**26.** Méthode selon l'une quelconque des revendications 23 à 25, dans laquelle le second fragment marqueur comprend un composé de la formule A11:

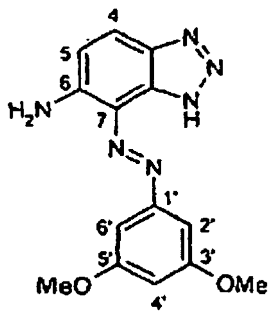

(A11)

**27.** Méthode selon l'une quelconque des revendications précédentes, dans laquelle la surface métallique est sélectionnée parmi les nanoparticules d'argent réduites par du citrate ou un film de PVA/argent.

**28.** Procédé de production d'un agent de détection pour utilisation dans la méthode telle que revendiquée dans l'une quelconque des revendications 1 à 27, le procédé comprenant:

(i) réaliser une sonde comprenant
une séquence cible du complément (TCS) complémentaire à la séquence cible à détecter;
flanquer la TCS de premier et second bras d'oligonucléotide,
lesdits premier et second bras d'oligonucléotide formant un duplex de souche,
et ledit premier bras ayant incorporé un premier fragment marqueur détectable par spectroscopie Raman augmentée en surface (SERS),
et ledit second bras se terminant dans un second fragment marqueur détectable par SERS,
ledit second bras comporte en outre un groupe de recherche de surface (SSG) apte à promouvoir l'association du second marqueur sur une surface métallique,
(ii) associer ladite sonde à une surface métallique par le SSG de la sonde de telle sorte que lesdits premier et second fragments marqueurs sont à proximité étroite l'un de l'autre et de la surface métallique.

**29.** Procédé de production d'une sonde pour utilisation dans l'agent de détection selon l'une quelconque des revendications 1 à 28, le procédé comprenant:

(i) synthétiser un acide nucléique comprenant
une séquence cible du complément (TCS) complémentaire à la séquence cible à détecter;
flanquer la TCS de premier et second bras d'oligonucléotide,
lesdits premier et second bras d'oligonucléotide étant apte à former un duplex de souche,
où ledit acide nucléique est synthétisé dans une direction 3' à 5',
et où le terminus 3' de l'acide nucléique est attaché à un support solide par un premier fragment marqueur détectable par spectroscopie Raman augmentée en surface (SERS),
(ii) à la suite de la synthèse dudit acide nucléique, conjuguer au terminus 5' de l'acide nucléique, un second fragment marqueur détectable par SERS et incluant un groupe de recherche de surface (SSG) apte à promouvoir l'association du second marqueur sur une surface métallique.

**30.** Procédé selon la revendication 29 dépendant de la revendication 15 ou la revendication 16, où un des groupes $R^B$ est un groupe amino ($-NH_2$) ou un groupe maléimido.

**31.** Procédé selon la revendication 30, dans lequel $R^{B6}$ est un groupe amino ($-NH_2$) ou un groupe maléimido.

**32.** Procédé selon la revendication 30 ou la revendication 31, dans lequel les groupes $R^B$ restants sont -H.

**33.** Procédé selon l'une quelconque des revendications 29 à 32, où la conjugaison au terminus 5' emploie une addition de phosporamidite et/ou une cycloaddition de Diels Alder.

**34.** Procédé de production d'une sonde pour utilisation dans l'agent de détection selon l'une quelconque des revendications 1 à 28, le procédé comprenant:

(i) synthétiser l'acide nucléique comprenant une séquence cible du complément (TCS) complémentaire à la séquence cible à détecter;
flanquer la TSC de premier et second bras d'oligonucléotide,
lesdits premier et second bras d'oligonucléotide étant aptes à former un duplex de souche,
où ledit acide nucléique est synthétisé dans une direction 3' à 5',
et où le terminus 3' de l'acide nucléique est attaché à un support solide par un second fragment marqueur détectable par spectroscopie Raman augmentée en surface (SERS), et incluant un groupe de recherche de surface (SSG) apte à promouvoir l'association du second marqueur sur une surface métallique,
(ii) à la suite de la synthèse dudit acide nucléique, conjuguer au terminus 5' de l'acide nucléique, un premier fragment marqueur détectable par SERS.

**35.** Agent de détection pour utilisation dans la méthode selon l'une quelconque des revendications 1 à 27, comprenant:

(i) une sonde comprenant:

une séquence cible du complément (TCS) complémentaire à la séquence cible;
des premier et second bras d'oligonucléotide flanquant la TCS, lesdits premier et second bras d'oligonucléotide formant un duplex de souche,
et ledit premier bras ayant incorporé un premier fragment marqueur détectable par fluorescence et spectroscopie Raman augmentée en surface (SERS), et ledit second bras se terminant par un second fragment marqueur détectable par SERS,
ledit second bras comporte en outre un groupe de recherche de surface (SSG) apte à promouvoir l'association du second marqueur sur une surface métallique;

(ii) une surface métallique associée à ladite sonde par ledit SSG de telle sorte que lesdits premier et second fragments marqueurs sont à proximité étroite l'un de l'autre et de la surface métallique.

**36.** Composition comprenant deux ou plusieurs agents de détection selon la revendication 35, ayant chacun des TCSs distinctifs et des premier et/ou second fragments marqueurs distinctifs.

**37.** Méthode selon l'une quelconque des revendications 1 à 27 pour déterminer la présence ou l'absence de deux ou plusieurs séquences d'acides nucléiques cibles dans un acide nucléique d'échantillon, la méthode comprenant réaliser une pluralité d'agents de détection tels que revendiqués dans la revendication 35, où chaque agent comprend une séquence cible du complément (TCS) complémentaire à une desdites séquences cibles,
et où chaque agent possède des caractéristiques de détection pouvant être distinguées,
et où la détection d'hybridation de chaque TCS à sa séquence cible correspondante présente dans l'échantillon est détectée par un changement dans les spectres de SERS de chaque agent, ledit changement étant distinctif de chaque agent.

**38.** Méthode ou procédé selon l'une quelconque des revendications 1 à 28, dans laquelle la séquence cible comprend un marqueur génétique.

**39.** Méthode selon l'une quelconque des revendications 1 à 27, dans laquelle:

(i) la méthode est pour la détection de la présence d'un organisme optionnellement pathogène dans un échantillon où la présence de la séquence cible est associée à la présence de l'organisme; ou
(ii) la méthode est pour le diagnostic ou le pronostic d'une maladie dans un individu dont l'acide nucléique d'échantillon est prélevé, où la maladie est associée à une variation d'ADN, et la séquence cible correspond à la séquence dans laquelle la variation a lieu; ou
(iii) la méthode est pour la sélection d'un organisme non-humain ayant un trait phénotypique particulier lorsque

le trait est associé à la séquence cible; ou
(iv) la méthode est pour l'isolation d'un acide nucléique codant pour un gène spécifique lorsque la séquence cible correspond à une séquence associée à ou dans ce gène; ou
(v) la méthode est pour la classification phylogénétique d'un organisme non-humain dont l'acide nucléique d'échantillon est prélevé, où la séquence cible est associée à une population, espèce ou genre; ou
(vi) la méthode est pour l'identification d'un individu dont l'acide nucléique d'échantillon est prélevé, où la séquence cible est associée à cet individu; ou
(vii) la méthode est pour l'établissement d'un profil d'expression d'une cellule ou tissu duquel l'échantillon d'ARNm est prélevé, où la séquence cible est associée à cette cellule ou tissu.

**40.** Méthode ou procédé selon l'une quelconque des revendications 1 à 28, dans laquelle la séquence cible comprend la séquence d'un ARN interférant court apte à bloquer un gène.

**41.** Méthode, procédé, agent, sonde ou composition tel que revendiqué dans l'une quelconque des revendications précédentes, où la SERS est une SERRS.

# FIGURE 1

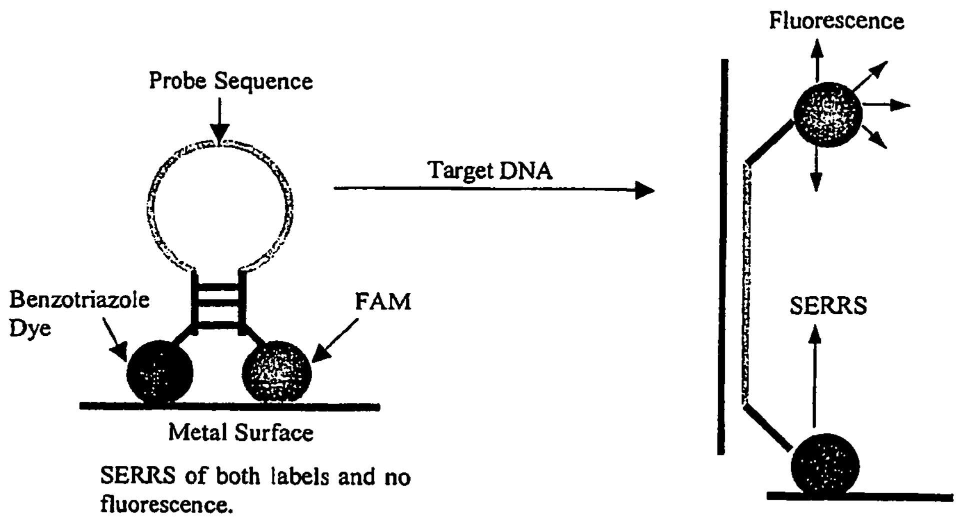
Probe Sequence
Target DNA
Benzotriazole Dye
FAM
Metal Surface
SERRS of both labels and no fluorescence.
Fluorescence
SERRS

# FIGURE 2

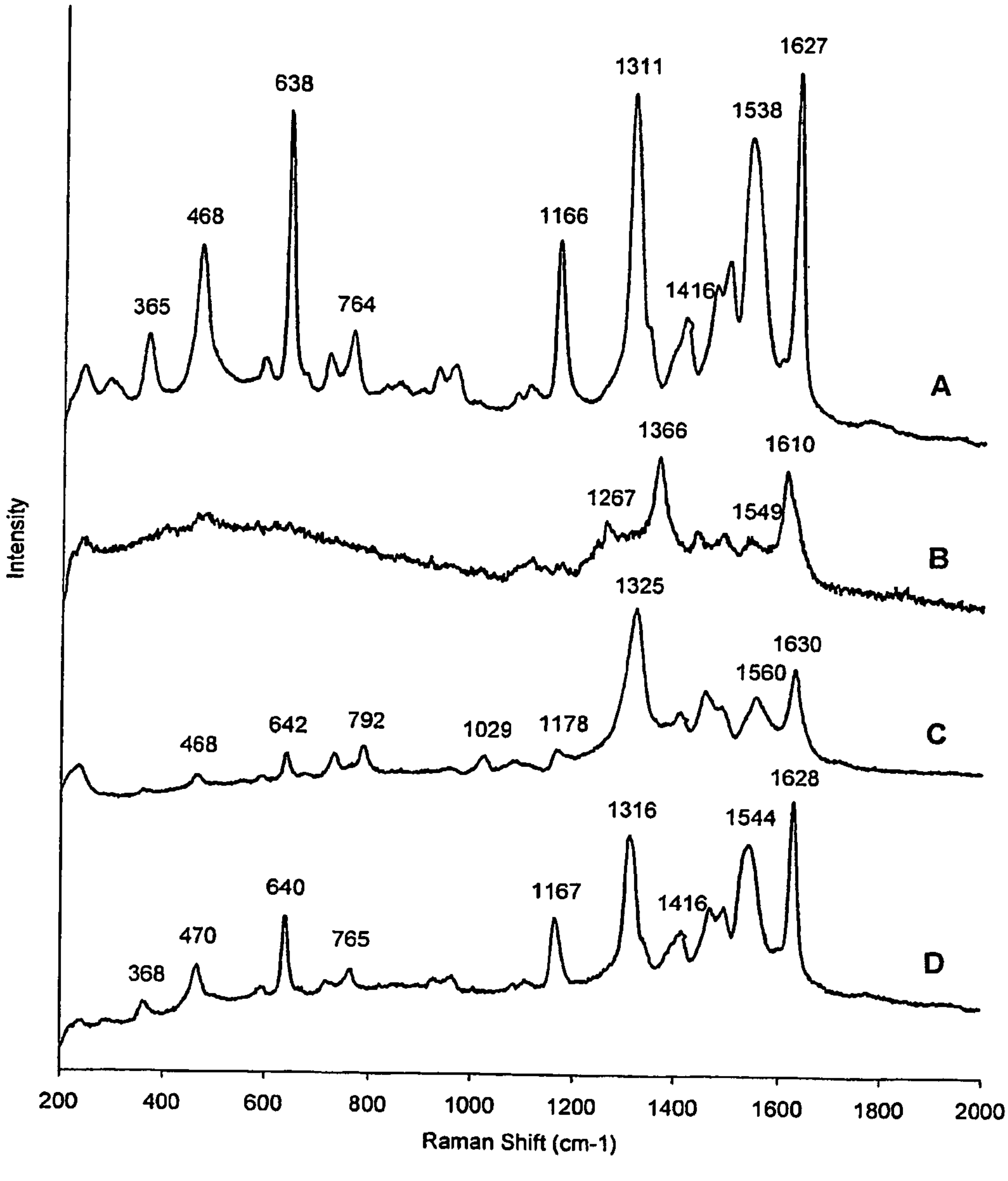
Intensity
638
1311
1627
1538
468
1166
365
764
1416
A
1366
1610
1267
1549
B
1325
1630
1560
468
642
792
1029
1178
C
1628
1316
1544
640
1167
1416
470
765
368
D
200
400
600
800
1000
1200
1400
1600
1800
2000
Raman Shift (cm-1)

# FIGURE 3

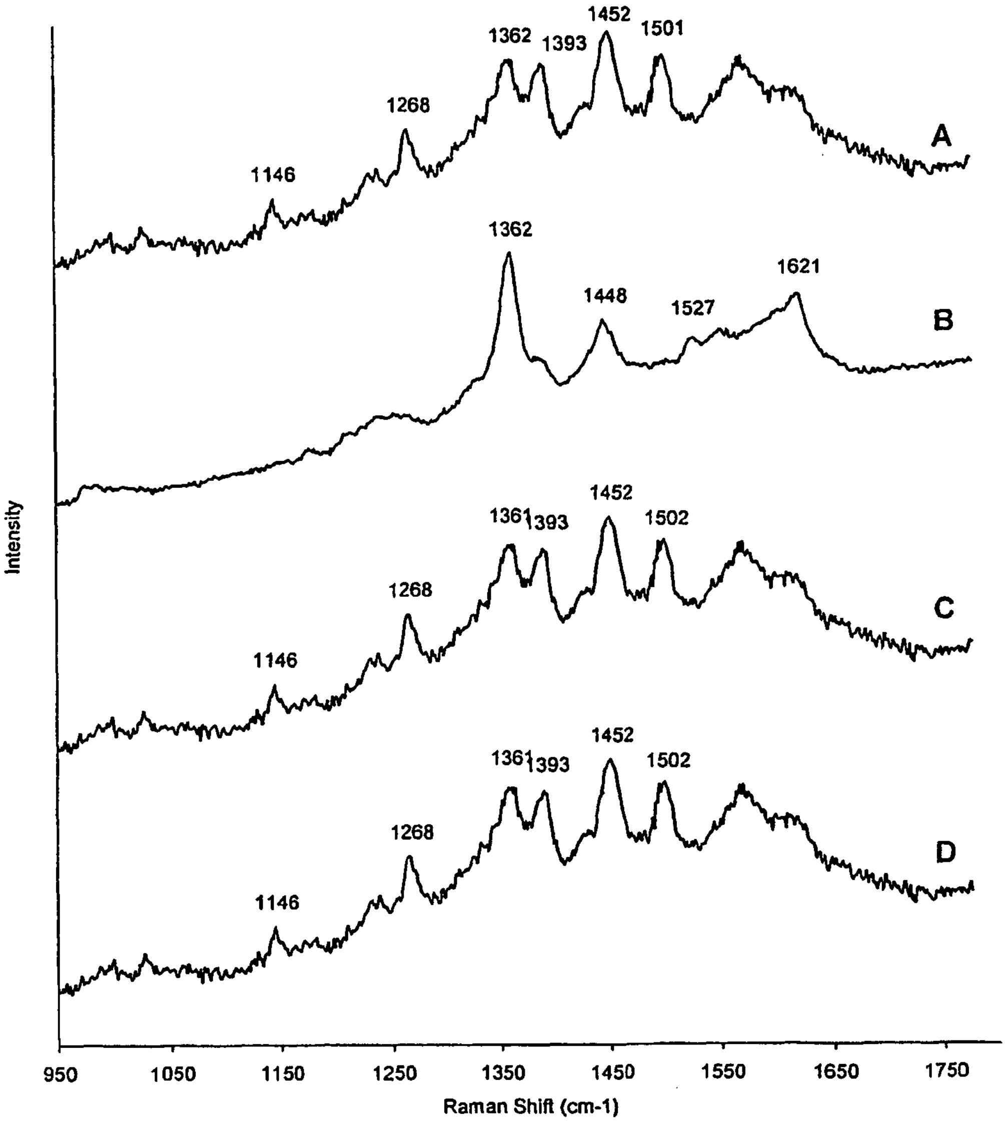
1146
1268
1362
1393
1452
1501
A
1362
1448
1527
1621
B
Intensity
1146
1268
1361
1393
1452
1502
C
1146
1268
1361
1393
1452
1502
D
950
1050
1150
1250
1350
1450
1550
1650
1750
Raman Shift (cm-1)

# FIGURE 4

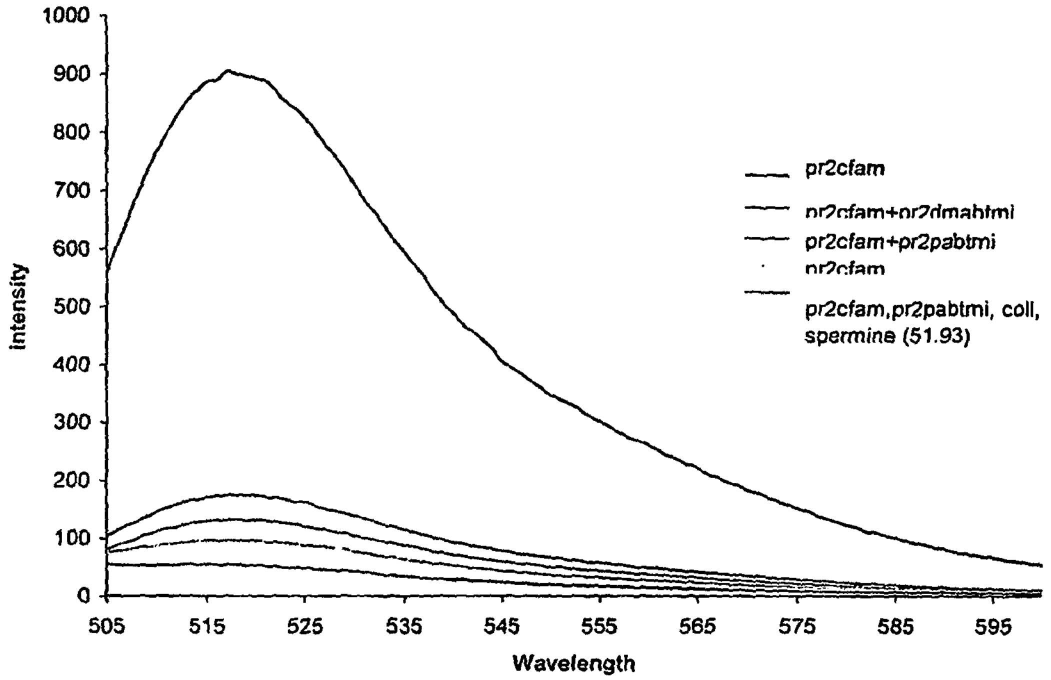
1000
900
800
700
600
500
400
300
200
100
0
Intensity
505
515
525
535
545
555
565
575
585
595
Wavelength
pr2cfam
pr2cfam+pr2dmabtmi
pr2cfam+pr2pabtmi
pr2cfam
pr2cfam,pr2pabtmi, coll,
spermine (51.93)

# FIGURE 5

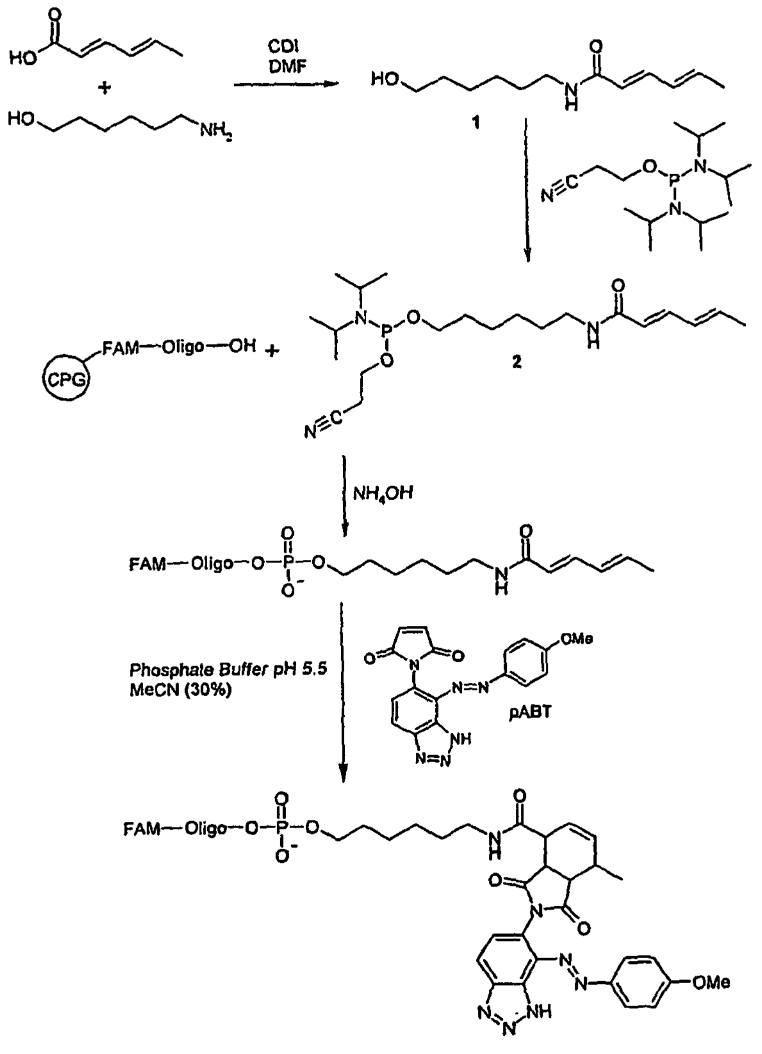

# FIGURE 6

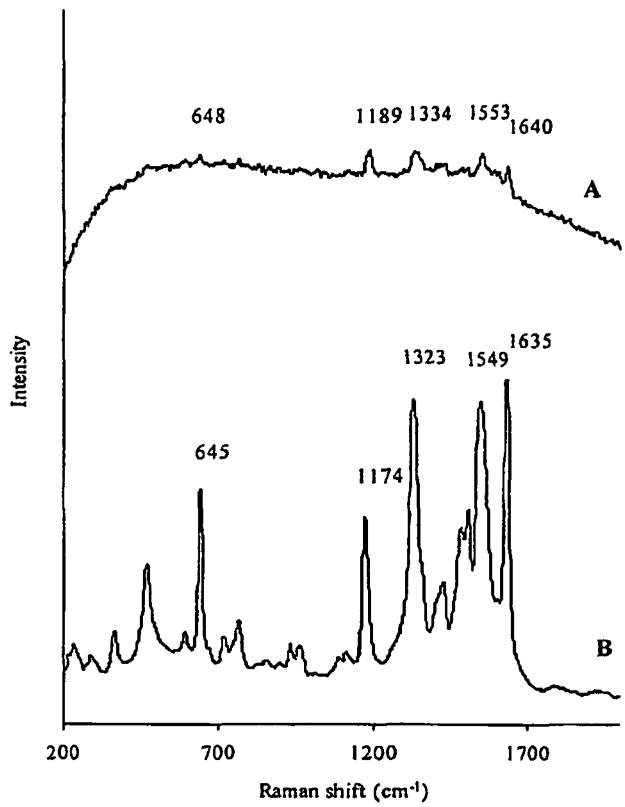
648
1189
1334
1553
1640
A
Intensity
1323
1549
1635
645
1174
B
200
700
1200
1700
Raman shift (cm-1)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5721102 A, Vo Dinh
- WO 9705280 A
- WO 9960157 A
- US 6466929 B
- WO 9601687 A, Tully


### Non-patent literature cited in the description


- **Marshall ; Hodgson.** *Nature Biotechnology,* 1998, vol. 16, 27-31
- **Cruickshank ; Stockwell.** *Tetrahedron Letters,* 1988, vol. 29, 5221-5224
- **Graham et al.** *Anal Chem,* 1997, vol. 69, 4703-4707
- **Wagner et al.** *Science,* 1993, vol. 260, 1510-1513
- **S. M. Elbashir ; W. Lendeckel ; T. Tuschl.** RNA interference is mediated by 21- and 22-nucleotide RNAs. *Genes Dev.,* 2001, vol. 15, 188-200
- **S. M. Elbashir ; J. Harborth ; W. Lendeckel ; A. Yalcin ; K. Weber ; T. Tuschl.** Duplexes of 21-nucleotide RNAs mediate RNA interference in cultured mammalian cells. *Nature,* 2001, vol. 411, 494-498
- **S.D. Brown.** Chemical Measurements and Data Reduction from a Systems Analysis Perspective. *TrAC,* 1987, vol. 6 (10), 260-266
- Chemometrics. **S.D. Brown.** Encyclopedia of Statistical Sciences. Wiley-Interscience, 1998, vol. 3, 77-87
- Chemometrics. **S.D. Brown.** Encyclopedia of Analytical Chemistry. Wiley Interscience, 2000, 9669-9671
- **K.L. Mello ; S.D. Brown.** Novel 'Hybrid' Classification Method Employing Bayesian Networks. *J. Chemom.,* 1999, vol. 13, 579-591
- **K.L. Mello ; S.D. Brown.** Combining Recursive Partitioning and Uncertain Reasoning for Data Exploration and Characteristic Prediction. *Proceedings, AAAI Symposium on Predictive Toxicology,* 1999, 119-122
- **N. A. Woody ; S.D. Brown.** Partial Least Squares Modeling of Continuous Nodes in Bayesian Networks. *Analytica Chimica Acta,* 2003, vol. 490, 355-63
- **H.W. Tan ; C.R. Mittermayr ; S. D. Brown.** Robust Calibration with Respect to Background Variation. *Applied Spectrosc.,* 2001, vol. 55, 827-33
- **R. N. Feudale ; H.-W. Tan ; S. D. Brown.** Piecewise Orthogonal Signal Correction. *Chemom. Intell. Lab. Syst.,* 2002, vol. 63, 129-38
- **Strekal, N. ; Maskevich, A. ; Maskevich, S. ; Jardillier, J. C. ; Nabiev, I.** *Biopolymers,* 2000, vol. 57, 325-328
- **Antunes, P. A. ; Constantino, C. J. L. ; Aroca, R. F. ; Duff, J.** *Langmuir,* 2001, vol. 17, 2958-2964
- **C H Munro et al.** *Analyst,* 1995, vol. 120, 993
- **S B Primrose.** Principles of Genome Analysis. Pub. Blackwell Science, 1995
- **Piatek, A. S. ; Tyagi, S. ; Pol, A. C. ; Telenti, A. ; Miller, L. P. ; Kramer, F. R. ; Alland, D.** *Nat. Biotechnol.,* 1990, vol. 8 (16), 359-363
- **Park, S. ; Wong, M. ; Marras, S. A. E. ; Cross, E. W. ; Kiehn, T. E. ; Chaturvedi, V. ; Tyagi, S. ; Perlin, D. S.** *Journal of Clinical Microbiology,* 2000, vol. 38, 2829-2836
- **Bratu, D. P. ; Cha, B. J. ; Mhlanga, M. M. ; Kramer, F. R. ; Tyagi, S.** *Proc. Natl. Acad. Sci. USA,* 2003, vol. 100, 13308-13313
- *Analyst,* 2003, vol. 128 (6), 692-699
- **Tyagi, S. ; Kramer, F. R.** Molecular beacons: Probes that fluoresce upon hybridization. *Nat. Biotechnol.,* 1996, vol. 14, 303-308
- **Holland, P. M. ; Abramson, R. D. ; Watson, R. ; Gelfand, D. H.** Detection of Specific Polymerase Chain-Reaction Product By Utilizing the 5'-]3' Exonuclease Activity of Thermus-Aquaticus Dna-Polymerase. *Proc. Natl. Acad. Sci. USA,* 1991, vol. 88, 7276-7280
- **Whitcombe, D. ; Theaker, J. ; Guy, S. P. ; Brown, T. ; Little, S.** Detection of PCR products using self-probing amplicons and fluorescence. *Nat. Biotechnol.,* 1999, vol. 17, 804-807
- **Wittwer, C. T. ; Herrmann, M. G. ; Moss, A. A. ; Rasmussen, R. P.** Continuous fluorescence monitoring of rapid cycle DNA amplification. *Biotechniques,* 1997, vol. 22, 130

- **Dubertret, B. ; Calame, M. ; Libchaber, A. J.** Single-mismatch detection using gold-quenched fluorescent oligonucleotides. *Nat. Biotechnol.,* 2001, vol. 19, 365-370
- **Hildebrandt, P. ; Stockburger, M.** Surface-Enhanced Resonance Raman-Spectroscopy of Rhodamine-6g Adsorbed On Colloidal Silver. *J. Phys. Chem.,* 1984, vol. 88, 5935-5944
- **Rodger, C. ; Smith, W. E. ; Dent, G. ; Edmondson, M.** Surface-enhanced resonance-Raman scattering: An informative probe of surfaces. *J. Chem. Soc., Dalton Trans.,* 1996, 791-799
- **Lee, P. C. ; Meisel, D.** Adsorption and Surface-Enhanced Raman of Dyes On Silver and Gold Sols. *J. Phys. Chem.,* 1982, vol. 86, 3391-3395
- **Munro, C. H. ; Smith, W. E. ; Garner, M. ; Clarkson, J. ; White, P. C.** Characterization of the Surface of a Citrate-Reduced Colloid Optimized For Use As a Substrate For Surface-Enhanced Resonance Raman-Scattering. *Langmuir,* 1995, vol. 11, 3712-3720
- **Volkan, M. ; Stokes, D. L. ; Tuan, V. D.** Surface-enhanced Raman of dopamine and neurotransmitters using sol-gel substrates and polymer-coated fiber-optic probes. *Appl. Spectrosc.,* 2000, vol. 54, 1842-1848
- **Graham, D. et al.** Selective detection of deoxyribonucleic acid at ultralow concentrations by SERRS. *Anal. Chem,* 1997, vol. 69, 4703-4707
- **Graham, D. ; Mallinder, B. J. ; Smith, W. E.** Surface-enhanced resonance Raman scattering as a novel method of DNA discrimination. *Angew. Chem., Int. Ed. Engl.,* 2000, vol. 39, 1061-1064
- **Graham, D. ; Mallinder, B. J. ; Smith, W. E.** Detection and identification of labeled DNA by surface enhanced resonance Raman scattering. *Biopolymers,* 2000, vol. 57, 85-91
- **Graham, D. ; Mallinder, B. J. ; Whitcombe, D. ; Smith, W. E.** Surface enhanced resonance Raman scattering (SERRS) - A first example of its use in multiplex genotyping. *Chemphyschem,* 2001, vol. 2, 746
- **Graham, D. ; Mallinder, B. J. ; Whitcombe, D. ; Watson, N. D. ; Smith, W. E.** Simple multiplex genotyping by surface-enhanced resonance Raman scattering. *Anal. Chem.,* 2002, vol. 74, 1069
- **Graham, D. et al.** Synthesis of novel monoazo benzotriazole dyes specifically for surface enhanced resonance Raman scattering. *Chem. Commun.,* 1998, 1187-1188
- **McAnally, G. et al.** SERRS dyes. - Part I. Synthesis of benzotriazole monoazo dyes as model analytes for surface enhanced resonance Raman scattering. *Analyst,* 2002, vol. 127, 838-841
- **Graham, D. ; Brown, R. ; Smith, W. E.** SERRS detection of PNA and DNA labelled with a specifically designed benzotriazole azo dye. *Chem. Commun.,* 2001, 1002-1003
- **Fruk, L. ; Grondin, A. ; Smith, W. E. ; Graham, D.** A new approach to oligonucleotide labelling using Diels-Alder cycloadditions and detection by SERRS. *Chem. Commun.,* 2002, 2100-2101
- **Brown, R. ; Smith, W. E. ; Graham, D.** Synthesis of a benzotriazole azo dye phosphoramidite for labelling of oligonucleotides. *Tetrahedron Lett.,* 2003, vol. 44, 1339-1342
- **Basu, H. S. ; Marton, L. J.** The Interaction of Spermine and Pentamines With Dna. *Biochem. J.,* 1987, vol. 244, 243-246
- **Grondin, A. ; Robson, D. C. ; Smith, W. E. ; Graham, D.** Benzotriazole maleimide as a bifunctional reactant for SERS. *J. Chem. Soc., Perkin Trans.,* 2001, vol. 2, 2136-2141